# EUROPÄISCHE PATENTSCHRIFT

(11) **EP 1 399 489 B1**
(45) Veröffentlichungstag und Bekanntmachung des Hinweises auf die Patenterteilung: **01.10.2008**
(21) Anmeldenummer: 02737983.3
(22) Anmeldetag: 23.04.2002
(51) Int. Cl.: C08F 6/08

(54) **VERFAHREN ZUR HERSTELLUNG VON POLYMERZUSAMMENSETZUNGEN, DURCH DAS VERFAHREN ERHÄLTLICHE POLYMERZUSAMMENSETZUNGEN UND IHRE VERWENDUNG**
METHOD FOR PRODUCING POLYMER COMPOSITIONS, POLYMER COMPOSITIONS OBTAINED BY USING THIS METHOD, AND THE USE THEREOF
PROCEDES POUR REALISER DES COMPOSES POLYMERES, COMPOSES POLYMERES AINSI REALISES ET LEUR UTILISATION

(30) Priorität: 29.05.2001 US 865526
(43) Veröffentlichungstag der Anmeldung: 24.03.2004
(73) Patentinhaber: Evonik RohMax Additives GmbH, 64293 Darmstadt (DE)
(72) Erfinder: EISENBERG, Boris, 64297 Darmstadt (DE); ROOS, Sebastian, 65779 Kelkheim/Ts (DE); HARPE, Carolin, 64653 Lorsch (DE)
(86) Internationale Anmeldenummer: PCT/EP2002/004446
(87) Internationale Veröffentlichungsnummer: WO 2002/096959

(56) Entgegenhaltungen:
- WO-A-01/40317
- US-A- 3 070 589
- DATABASE WPI Section Ch, Week 199929 Derwent Publications Ltd., London, GB; Class A18, AN 1999-338315 XP002207424 & CN 1 210 111 A (INST YANSHAN PETROCHEMICAL CO BEIJING), 10. März 1999 (1999-03-10)
- WANG J-S ET AL: "CONTROLLED/LIVING RADICAL POLYMERIZATION HALOGEN ATOM TRANSFER RADICAL POLYMERIZATION PROMOTED BY A CU(I)/CU(II) REDOX PROCESS" MACROMOLECULES, AMERICAN CHEMICAL SOCIETY. EASTON, US, Bd. 28, Nr. 23, 1995, Seiten 7901-7910, XP000984931 ISSN: 0024-9297 in der Anmeldung erwähnt

## Beschreibung

Die vorliegende Erfindung betrifft Verfahren zur Herstellung von Polymerzusammensetzungen mit reduziertem Katalysatorgehalt, bei dem man ethylenisch ungesättigte Monomere, die weniger als 0,5 Gew.-% ethylenisch ungesättigte Monomere mit mindestens einer Carbonsäuregruppe, Sulfonsäuregruppe und/oder mindestens einer Phosphonsäuregruppe bezogen auf das Gesamtgewicht der ethylenisch ungesättigten Monomere enthalten, mittels Initiatoren, die eine übertragbare Atomgruppe aufweisen, und einem oder mehreren Katalysatoren, die mindestens ein Übergangsmetall umfassen, in Gegenwart von Liganden, die mit dem oder den metallischen Katalysatoren eine Koordinationsverbindung bilden können, polymerisiert und nach der Polymerisation den im Polymer enthaltenen Katalysator mindestens teilweise abtrennt. Weiterhin betrifft die vorliegende Erfindung auch die durch das erfindungsgemäße Verfahren erhältlichen Polymerzusammensetzungen sowie deren Verwendung.

Die radikalische Polymerisation ist ein wichtiges kommerzielles Verfahren zur Herstellung einer Vielfalt von Polymeren, wie beispielsweise PMMA und Polystyrol. Nachteilig ist hierbei, daß der Aufbau der Polymere, das Molekulargewicht und die Molekulargewichtsverteilung relativ schlecht gesteuert werden können.

Eine Lösung dieser Probleme liefert das sogenannte ATRP-Verfahren (=Atom Transfer Radical Polymerisation). Es wird angenommen, daß es sich hierbei um eine "lebende" radikalische Polymerisation handelt, ohne daß durch die Beschreibung des Mechanismus eine Beschränkung erfolgen soll. In diesen Verfahren wird eine Übergangsmetallverbindung mit einer Verbindung umgesetzt, welche eine übertragbare Atomgruppe aufweist. Hierbei wird die übertragbare Atomgruppe auf die Übergangsmetallverbindung transferiert, wodurch das Metall oxidiert wird. Bei dieser Reaktion bildet sich ein Radikal, das an ethylenische Gruppen addiert. Die Übertragung der Atomgruppe auf die Übergangsmetallverbindung ist jedoch reversibel, so daß die Atomgruppe auf die wachsende Polymerkette rückübertragen wird, wodurch ein kontrolliertes Polymerisationssystem gebildet wird. Dementsprechend kann der Aufbau des Polymers, das Molekulargewicht und die Molekulargewichtsverteilung gesteuert werden.

Diese Reaktionsführung wird beispielsweise von J-S. Wang et al., J.Am.Chem.Soc., vol.117, p.5614-5615 (1995), von Matyjaszewski, Macromolecules, vol.28, p.7901 - 7910 (1995) beschrieben. Darüber hinaus offenbaren die Patentanmeldungen WO 96/30421, WO 97/47661, WO 97/18247, WO 98/20050, WO 98/40415 und WO 99/10387 Varianten der zuvor erläuterten ATRP.

Der oben beschriebene Mechanismus ist nicht unumstritten. So wird beispielsweise in WO 97/47661 beschrieben, daß die Polymerisation nicht durch einen radikalischen Mechanismus sondern durch Insertion erfolgt. Für die vorliegende Erfindung ist diese Differenzierung jedoch ohne belang, da bei der in WO 97/47661 offenbarten Reaktionsführung Verbindungen verwendet werden, die auch bei einer ATRP eingesetzt werden.

Je nach erwünschter Polymerlösung werden die Monomere, die Übergangsmetallkatalysatoren, die Liganden und die Initiatoren ausgewählt. Es wird angenommen, daß eine hohe Geschwindigkeitskonstante der Reaktion zwischen dem Übergangsmetall-Ligand-Komplex und der übertragbaren Atomgruppe ebenso wie eine geringe Konzentration freier Radikale im Gleichgewicht wesentlich für eine enge Molekulargewichtsverteilung sind. Ist die Konzentration an freien Radikalen zu hoch, treten typische Abbruchreaktionen auf, die für eine breite Molekulargewichtsverteilung verantwortlich sind. Die Austauschrate ist beispielsweise abhängig von der übertragbaren Atomgruppe, dem Übergangsmetall, den Liganden und dem Anion der Übergangsmetallverbindung. Wertvolle Hinweise zur Auswahl dieser Komponenten findet der Fachmann beispielsweise in WO 98/40415.

Die Vorteile bekannter ATRP-Polymerisationsverfahren beschränken sich jedoch hauptsächlich auf Monomere, die selbst polar sind oder die in polaren Medien eine gute Löslichkeit zeigen. Zwar ist die vereinzelte Verwendung von unpolaren aprotischen Kohlenwasserstoffen wie Benzol, Toluol, Xylol, Cyclohexan und Hexan ebenfalls literaturbekannt, die mit diesen Lösungsmitteln hergestellten Polymere weisen jedoch deutlich höhere Polydispersitäten auf. Dieser Effekt wird beispielsweise in WO 98/40415 beschrieben.

Darüber hinaus offenbart dieses Dokument zwar die Möglichkeit polare Monomere, wie Methylmethacrylat oder Styrol, mittels metallischem Kupfer zu polymerisieren, allerdings ist die Molekulargewichtsverteilung wesentlich ungünstiger als bei Verwendung einer Mischung von Cu⁰/CuBr bzw. Cu⁰/CuBr₂.

In Pol. Preprint (ACS, Div. Pol. Chem.), 1999, 40(2), 432 beschreiben M.J.Ziegler et al. unter anderem eine schlechte Steuerbarkeit der Polymerisation von t-Butylmethacrylat, falls diese in Masse stattfindet. Bei Verwendung von ca. 20 bis 25 Gew.-% an polaren Lösungsmitteln läßt sich sowohl die Molmasse als auch die Polydispersität verbessern. Allerdings können ethylenisch ungesättigte Monomermischungen, die zu mindestens 50 Gew.-% ethylenisch ungesättigte Esterverbindungen mit Alkyl- oder Heteroalkylketten mit mindestens 8 Kohlenstoffatome enthalten, wegen der begrenzten Löslichkeit von ethylenisch ungesättigten Esterverbindungen mit Alkyl- oder Heteroalkylresten mit mindestens 8 Kohlenstoffatomen in polaren Lösungsmitteln nur schlecht mittels der bekannten ATRP-Verfahren polymerisiert werden. Darüber hinaus müssen diese großen Mengen an polaren Lösungsmitteln, je nach Verwendung, nach Herstellung der Polymere von der Zusammensetzung abgetrennt werden.

Ein weiterer Nachteil der bekannten ATRP-Verfahren ist darin zu erblicken, daß die resultierenden Polymere bzw. Polymerlösungen Rückstande des eingesetzten metallischen Katalysators aufweisen. Diese Katalysatorrückstände können für viele Anwendungen nachteilig sein, da sie die Produkteigenschaften des Polymers negativ beeinflussen und darüber hinaus seine Umweltverträglichkeit herabsetzen können.

Die Abtrennung der Katalysatorrückstände mittels Filtration ist wegen der hohen Viskosität der Polymerlösung und der niedrigen Korngröße des Katalysators - falls überhaupt - nur schwer und auf zeit- und kostenintensive Art und Weise möglich. Sie erfordert die Verwendung großer Mengen an sich bekannter Filtrierhilfsmittel, wie Cellulose, Kieselgel, Kieselgur (z. B. Celite^{®}), Perlit, Holzkohle und Holzmehl, wodurch die Filtrationsrate derart stark erniedrigt wird, daß eine sinnvolle Anwendung derartiger Verfahren zur Abtrennung von Katalysatorresten im großtechnischen Maßstab nicht möglich ist.

In Anbetracht des Standes der Technik war es nun Aufgabe der vorliegenden Erfindung, ein Verfahren zur Herstellung einer Polymerzusammensetzung zur Verfügung zu stellen, die im wesentlichen frei von Katalysatorrückständen ist. Insbesondere sollte das Verfahren auf einfache Art und Weise großtechnisch anwendbar sein.

Eine weitere Aufgabe der vorliegenden Erfindung war auch, ein Verfahren zur Herstellung einer Polymerzusammensetzung anzugeben, bei welchem die in der Zusammensetzung enthaltenen Polymere zu mindestens 50 Gew.-% aus ethylenisch ungesättigten Esterverbindungen der Formel (I) aufgebaut sind 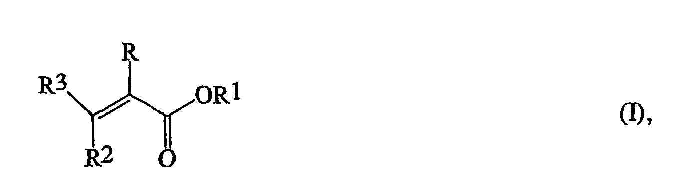 worin R Wasserstoff oder Methyl, R¹ einen linearen oder verzweigten Alkylrest mit 1 bis 40, R² und R³ unabhängig Wasserstoff oder eine Gruppe der Formel -COOR' bedeuten, wobei R' Wasserstoff oder einen linearen oder verzweigten Alkylrest mit 1 bis 40 Kohlenstoffatomen darstellt. Dabei sollte das Verfahren insbesondere zur Herstellung einer Polymerzusammensetzung geeignet sein, bei welchem die in der Zusammensetzung enthaltenen Polymere zu mindestens 50 Gew.-% aus (Meth)acrylaten mit Alkyl- oder Heteroalkylketten mit mindestens 8 Kohlenstoffatomen aufgebaut sind.

Der vorliegenden Erfindung lag auch die Aufgabe zugrunde, daß die in der Zusammensetzung enthaltenen Polymere eine enge Molekulargewichtsverteilung aufweisen. Vor allem soll bei der Herstellung der Polymermischung der Einsatz aufwendigerer Verfahren, wie etwa der anionischen Polymerisation, vermieden werden.

Eine weitere Aufgabe war auch darin zu erblicken, ein Verfahren zur Herstellung einer Polymerzusammensetzung zur Verfügung zu stellen, das auf einfache Art und Weise die Synthese von Copolymeren mit einem nicht statistischem Aufbau, insbesondere die Synthese von Diblock-, Triblock- und Gradientencopolymeren, ermöglicht.

Aufgabe der vorliegenden Erfindung war auch, ein Verfahren zur Polymerisation zur Verfügung zu stellen, durch das Polymere mit höheren oder hohen Molekulargewichten erhalten werden können.

Eine weitere Aufgabe bestand darin, ein kostengünstig durchführbares Verfahren anzugeben, das großtechnisch anwendbar ist. Darüber hinaus sollte das Verfahren mit kommerziell erhältlichen Komponenten leicht und einfach ausführbar sein.

Gelöst werden diese sowie weitere nicht explizit genannten Aufgaben, die jedoch aus den hierin einleitend diskutierten Zusammenhängen ohne weiteres ableitbar oder erschließbar sind, durch ein Verfahren zur Herstellung einer Polymerzusammensetzung mit allen Merkmalen des Patentanspruchs 1. Zweckmäßige Abwandlungen des erfindungsgemäßen Verfahrens werden in den auf Anspruch 1 rückbezogenen Unteransprüchen unter Schutz gestellt. Der unabhängige Produktanspruch bezieht sich auf die durch das erfindungsgemäße Verfahren erhältlichen Polymerzusammensetzungen und der vorliegende Verwendungsanspruch beschreibt eine erfindungsgemäße bevorzugte Verwendung der erfindungsgemäßen Polymerzusammensetzungen.

Dadurch, daß man bei einem Verfahren der eingangs genannten Art nach der Polymerisation die Polymerzusammensetzung in Gegenwart mindestens eines Filtrierhilfsmittels filtriert, welches mindestens 0,5 Gew.-% wiederkehrende Einheiten bezogen auf das Gesamtgewicht des Filtrierhilfsmittels enthält, die mindestens eine Carbonsäuregruppe, Sulfonsäuregruppe und/oder mindestens eine Phosphonsäuregruppe aufweisen, gelingt es auf nicht ohne weiteres vorhersehbare Weise ein Verfahren zur Herstellung einer Polymerzusammensetzung zur Verfügung zu stellen, die im wesentlichen frei von Übergangsmetallverbindungen ist. Diese Herstellungsart ist besonders kostengünstig durchführbar und daher für eine technische Produktion hervorragend geeignet.

Zugleich lassen sich durch das erfindungsgemäße Verfahren eine Reihe weiterer Vorteile erzielen. Hierzu gehören unter anderem:
⇒ Das erfindungsgemäße Verfahren erlaubt das Abtrennen der Katalysatorrückstände bei sehr hohen Filtrationsraten.
⇒ Es ist für die Herstellung von Polymerzusammensetzungen besonders geeignet, die zu mindestens 50 Gew.-% aus ethylenisch ungesättigten Esterverbindungen der Formel (I) aufgebaut sind 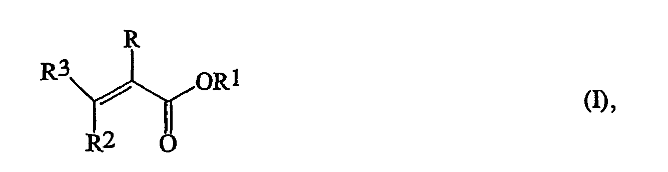 worin R Wasserstoff oder Methyl, R¹ einen linearen oder verzweigten Alkylrest mit 1 bis 40, R² und R³ unabhängig Wasserstoff oder eine Gruppe der Formel -COOR' bedeuten, wobei R' Wasserstoff oder einen linearen oder verzweigten Alkylrest mit 1 bis 40 Kohlenstoffatomen darstellt. Dabei hat es sich für die Herstellung von Polymerzusammensetzungen, die zu mindestens 50 Gew.-% aus (Meth)acrylaten mit Alkyl- oder Heteroalkylketten mit mindestens 8 Kohlenstoffatomen aufgebaut sind, als ganz besonders vorteilhaft erwiesen.
⇒ Die Polymere in den durch das Verfahren hergestellten Polymerzusammensetzungen zeichnen sich durch eine enge Molekulargewichtsverteilung aus.
⇒ Das erfindungsgemäße Verfahren erlaubt eine hervorragende Kontrolle des Molekulargewichts der in den Zusammensetzungen enthaltenen Polymeren.
⇒ Hinsichtlich Druck, Temperatur und Lösungsmittel ist die Durchführung der Polymerisation relativ unproblematisch, auch bei moderaten Temperaturen werden unter bestimmten Umständen akzeptable Ergebnisse erzielt.
⇒ Mit Hilfe des erfindungsgemäßen Verfahrens lassen sich hohe Ausbeuten erzielen.
⇒ Das erfindungsgemäße Verfahren ist arm an Nebenreaktionen.
⇒ Das Verfahren ist kostengünstig durchführbar. Hierbei sollte berücksichtigt werden, daß nur sehr geringe Mengen an Filtrierhilfsmittel eingesetzt werden.
⇒ Mit Hilfe des Verfahrens der vorliegenden Erfindung können Polymere mit einem vorher definierten Aufbau und gezielter Struktur hergestellt werden. Insbesondere sind durch das erfindungsgemäße Verfahren Copolymeren mit einem nicht statistischem Aufbau, insbesondere Diblock-, Triblock- und Gradientencopolymeren auf einfache Art und Weise zugänglich.
⇒ Mit Hilfe des erfindungsgemäßen Verfahrens lassen sich Monomere mit ungesättigten Esterverbindungen copolymerisieren, die selbst als Ligand wirken können. Besonders überraschend wird hierbei eine enge Molekulargewichtsverteilung erhalten.

Gemäß der vorliegenden Erfindung werden ethylenisch ungesättigte Monomere polymerisiert, die weniger als 0,5 Gew.-%, zweckmäßigerweise weniger als 0,1 Gew. %, insbesondere keine ethylenisch ungesättigte Monomere mit mindestens einer Carbonsäuregruppe, Sulfonsäuregruppe und/oder mindestens einer Phosphonsäuregruppe bezogen auf das Gesamtgewicht der ethylenisch ungesättigten Monomere enthalten. Ethylenisch ungesättigte Monomere sind dem Fachmann bestens bekannt, sie umfassen alle die organischen Verbindungen, die mindestens eine ethylenische Doppelbindung aufweisen.

Ethylenisch ungesättigte Monomere mit mindestens einer Carbonsäuregruppe, Sulfonsäuregruppe und/oder mindestens einer Phosphonsäuregruppe umfassen alle organische Verbindungen, die sowohl mindestens eine ethylenische Doppelbindung als auch mindestens eine Carbonsäuregruppe, Sulfonsäuregruppe und/oder mindestens eine Phosphonsäuregruppe aufweisen. Zu ihnen gehören beispielsweise:
Acrylsäure,
Methacrylsäure,
1-[2-(Isopropenylcarbonyloxy)ethyl]-maleat (Monoester aus 2-Hydroxyethylmethaerylat (HEMA) und Maleinsäure),
1-[2-(Vinylcarbonyloxy)ethyl]-maleat (Monoester aus 2-Hydroxyethylacrylat (HEA) und Maleinsäure),
1-[2-(Isopropenylcarbonyloxy)ethyl]-succinat (Monoester aus HEMA und Bernsteinsäure),
1-[2-(Vinylcarbonyloxy)ethyl]-succinat (Monoester aus HEA und Bernsteinsäure),
1-[2-(Isopropenylcarbonyloxy)ethyl]-phtalat (Monoester aus HEMA und Phthalsäure),
1-[2-(Vinylcarbonyloxy)ethyl]-phtalat (Monoester aus HEA und Phthalsäure),
1-[2-(Isopropenylcarbonyloxy)ethyl]-hexahydrophtalat (Monoester aus HEMA und Hexahydrophthalsäure),
1-[2-(Vinylcarbonyloxy)ethyl]-hexahydrophtalat (Monoester aus HEA und Hexahydrophthalsäure),
1-[2-(Isopropenylcarbonyloxy)butyl]-maleat (Monoester aus 2-Hydroxybutylmethacrylat (HBMA) und Maleinsäure),
1-[2-(Vinylcarbonyloxy)butyl]-maleat (Monoester aus 2-Hydroxybutylacrylat (HBA) und Maleinsäure),
1-[2-(Isopropenylcarbonyloxy)butyl]-succinat (Monoester aus HBMA und Bernsteinsäure),
1-[2-(Vinylcarbonyloxy)butyl]-succinat (Monoester aus HBA und Bernsteinsäure),
1-[2-(Isopropenylcarbonyloxy)butyl]-phtalat (Monoester aus HBMA und Phthalsäure),
1-[2-(Vinylcarbonyloxy)butyl]-phtalat (Monoester aus HBA und Phthalsäure),
1-[2-(Isopropenylcarbonyloxy)butyl]-hexahydrophtalat (Monoester aus HBMA und Hexahydrophthalsäure),
1-[2-(Vinylcarbonyloxy)butyl]-hexahydrophtalat (Monoester aus HBA und Hexahydrophthalsäure),
Fumarsäure,
Monoester der Fumarsäure,
Maleinsäure,
Monoester der Maleinsäure,
Crotonsäure,
Itaconsäure,
Acrylamidoglykolsäure,
Methacrylamidobenzoesäure,
Zimtsäure,
Vinylessigsäure,
Trichloracrylsäure,
10-Hydroxy-2-decensäure,
4-Methacryloxyethyltrimethylsäure,
Styrolcarbonsäure,
2-(Isopropenylcarbonyloxy)-ethansulfonsäure,
2-(Vinylcarbonyloxy)-ethansulfonsäure,
2-(Isopropenylcarbonyloxy)-propylsulfonsäure,
2-(Vinylcarbonyloxy)-propylsulfonsäure,
2-Acrylamido-2-methylpropansulfonsäure,
Acrylamidododecansulfonsäure,
2-Propen-1-sulfonsäure,
Methallylsulfonsäure,
Styrolsulfonsäure,
Styroldisulfonsäure,
Methacrylamidoethanphosphonsäure,
Vinylphosphonsäure.

Erfindungsgemäß werden ethylenisch ungesättigte Monomere besonders bevorzugt, die 50 bis 100 Gew.-%, bevorzugt 60 bis 100 Gew.-%, bezogen auf das Gesamtgewicht der ethylenisch ungesättigten Monomere, eine oder mehrere ethylenisch ungesättigte Esterverbindungen der Formel (I) 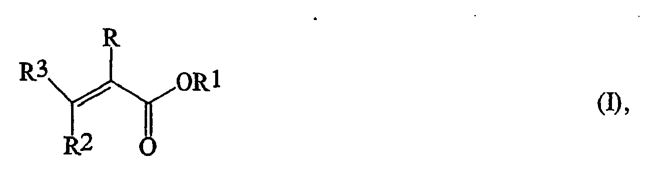 worin R Wasserstoff oder Methyl, R¹ einen linearen oder verzweigten Alkylrest mit 1 bis 40 Kohlenstoffatomen bezeichnet, R² und R³ unabhängig Wasserstoff oder eine Gruppe der Formel -COOR' bedeuten, wobei R' Wasserstoff oder einen linearen oder verzweigten Alkylrest mit 1 bis 40 Kohlenstoffatomen darstellt, aufweisen. Hierbei kann der Alkylrest linear, cyclisch oder verzweigt sein.

Zu diesen Verbindungen gemäß Formel (I) gehören (Meth)acrylate, Maleate und Fumarate, die jeweils mindestens einen Alkoholrest mit 1 bis 40 Kohlenstoffatomen aufweisen.

Ganz besonders bevorzugt werden ethylenisch ungesättigte Monomere, die 50 bis 100 Gew.-%, bevorzugt 60 bis 100 Gew.-%, bezogen auf das Gesamtgewicht der ethylenisch ungesättigten Monomere, eine oder mehrere ethylenisch ungesättigte Esterverbindungen der Formel (II) 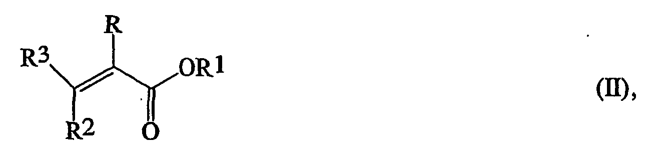 worin R Wasserstoff oder Methyl, R¹ einen linearen oder verzweigten Alkylrest mit 8 bis 40, vorzugsweise 10 bis 40, Kohlenstoffatomen, besonders zweckmäßig 10 bis 24 Kohlenstoffatomen, R² und R³ unabhängig Wasserstoff oder eine Gruppe der Formel -COOR' bedeuten, wobei R' Wasserstoff oder einen linearen oder verzweigten Alkylrest mit 8 bis 40, vorzugsweise 10 bis 40, Kohlenstoffatomen darstellt, aufweisen. Hierbei kann der Alkylrest linear, cyclisch oder verzweigt sein.

Hierbei sind (Meth)acrylate der Formel (III) bevorzugt 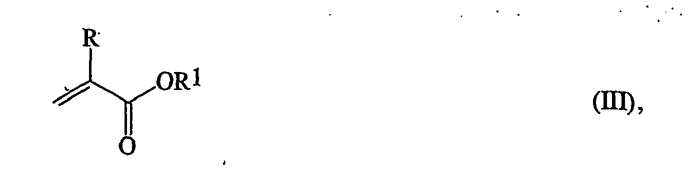 worin
R Wasserstoff oder Methyl und R¹ einen linearen oder verzweigten Alkylrest mit 8 bis 40, vorzugsweise 10 bis 40, Kohlenstoffatomen bedeuten.

Der Ausdruck (Meth)acrylate umfaßt Methacrylate und Acrylate sowie Mischungen aus beiden. Diese Monomere sind weithin bekannt. Zu den (Meth)acrylaten der Formel (III) gehören unter anderem
(Meth)acrylate, die sich von gesättigten Alkoholen ableiten, wie 2-Ethylhexyl(meth)acrylat,
Octyl(meth)acrylat, Nonyl(meth)acrylat, iso-Octyl(meth)acrylat, iso-Nonyl(meth)acrylat,
2-tert.-Butylheptyl(meth)acrylat, 3-iso-Propylheptyl(meth)acrylat, Decyl(meth)acrylat,
Undecyl(meth)acrylat, 5-Methylundecyl(meth)acrylat, Dodecyl(meth)acrylat,
2-Methyldodecyl(meth)acrylat, Tridecyl(meth)acrylat, 5-Methyltridecyl(meth)acrylat,
Tetradecyl(meth)acrylat, Pentadecyl(meth)acrylat, Hexadecyl(meth)acrylat,
2-Methylhexadecyl(meth)acrylat, Heptadecyl(meth)acrylat,
5-iso-Propylheptadecyl(meth)acrylat, 4-tert.-Butyloctadecyl(meth)acrylat,
5-Ethyloctadecyl(meth)acrylat, 3-iso-Propyloctadecyl(meth)acrylat, Octadecyl(meth)acrylat,
Nonadecyl(meth)acrylat, Eicosyl(meth)acrylat, Cetyleicosyl(meth)acrylat,
Stearyleicosyl(meth)acrylat, Docosyl(meth)acrylat und/oder Eicosyltetratriacontyl-(meth)acrylat;
(Meth)acrylate, die sich von ungesättigten Alkoholen ableiten, wie z. B. Oleyl(meth)acrylat;
Cycloalkyl(meth)acrylate, wie 3-Vinyl-2-butyl-cyclohexyl(meth)acrylat und Bornyl(meth)acrylat.

Die Esterverbindungen mit langkettigem Alkoholrest werden im Rahmen der vorliegenden Erfindung als Komponente a) bezeichnet. Sie lassen sich beispielsweise durch Umsetzen von (Meth)acrylaten, Fumaraten, Maleaten und/oder den entsprechenden Säuren mit langkettigen Fettalkoholen erhalten, wobei im allgemeinen eine Mischung von Estern, wie beispielsweise (Meth)acrylaten mit verschieden langkettigen Alkoholresten entsteht. Zu diesen Fettalkoholen gehören unter anderem Oxo Alcohol® 7911 und Oxo Alcohol® 7900, Oxo Alcohol® 1100 von Monsanto; Alphanol® 79 von ICI; Nafol® 1620, Alfol® 610 und Alfol® 810 von Condea; Epal® 610 und Epal® 810 von Ethyl Corporation; Linevol® 79, Linevol® 911 und Dobanol® 25L von Shell AG; Lial® 125 von Condea Augusta, Mailand; Dehydad® und Lorol® von Henkel KGaA sowie Linopol® 7 - 11 und Acropol® 91 Ugine Kuhlmann.

Neben den als Komponente
a) bezeichneten ethylenisch ungesättigten Esterverbindungen, die sich von Alkoholen mit 8 bis 40 Kohlenstoffen ableiten, enthält die Monomermischung zweckmäßigerweise weitere ethylenisch ungesättigte Monomere, die mit den zuvor genannten Esterverbindungen copolymerisierbar sind. Zu diesen Monomeren gehören unter anderem
b) 0 bis 40 Gew.-%, insbesondere 0,5 bis 20 Gew.-% eines oder mehrerer (Meth)acrylate der Formel (IV) 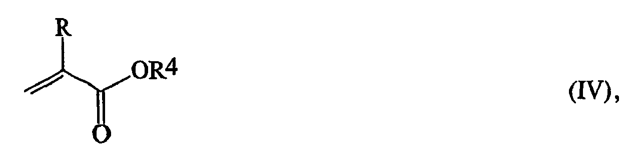 worin R Wasserstoff oder Methyl und R⁴ einen linearen oder verzweigten Alkylrest mit 1 bis 7 Kohlenstoffatomen bedeuten,
c) 0 bis 40 Gew.-%, insbesondere 0,5 bis 20 Gew.-% eines oder mehrerer (Meth)acrylate der Formel (V) 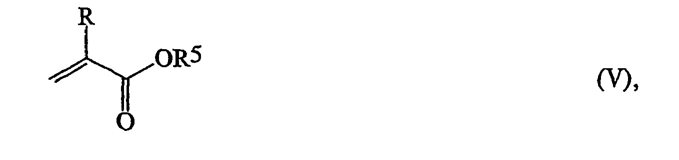 worin R Wasserstoff oder Methyl und R⁵ einen mit einer OH-Gruppe substituierten Alkylrest mit 2 bis 20, insbesondere 2 bis 6 Kohlenstoffatomen oder einen alkoxylierten Rest der Formel (VI) 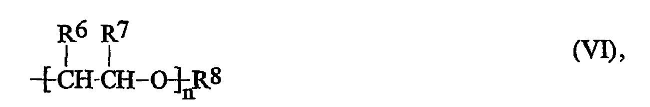 worin R⁶ und R⁷ unabhängig für Wasserstoff oder Methyl, R⁸ Wasserstoff oder einen Alkylrest mit 1 bis 40 Kohlenstoffatomen und n eine ganze Zahl von 1 bis 60 steht, bedeuten,
d) 0 bis 40 Gew.-%, insbesondere 0,5 bis 20 Gew.-% eines oder mehrerer (Meth)acrylate der Formel (VII) 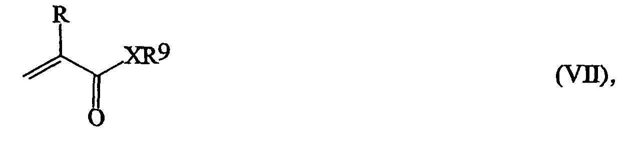 worin R Wasserstoff oder Methyl, X Sauerstoff oder eine Aminogruppe der Formel - NH- oder -NR¹⁰-, worin R¹⁰ für einen Alkylrest mit 1 bis 40 Kohlenstoffatomen steht, und R⁹ einen mit mindestens einer -NR¹¹R¹²-Gruppe substituierten linearen oder verzweigten Alkylrest mit 2 bis 20, vorzugsweise 2 bis 6 Kohlenstoffatomen bedeuten, wobei R¹¹ und R¹² unabhängig von einander für Wasserstoff, einen Alkylrest mit 1 bis 20, vorzugsweise 1 bis 6 stehen oder worin R¹¹ und R¹² unter Einbeziehung des Stickstoffatoms und gegebenenfalls eines weiteren Stickstoff oder Sauerstoffatoms einen 5- oder 6-gliederigen Ring bilden, der gegebenenfalls mit C₁-C₆-Alkyl substituiert sein kann,
e) 0 bis 40 Gew.-%, insbesondere 0,5 bis 20 Gew.-% eines oder mehrerer Comonomere, wobei sich die Angabe Gew.-% jeweils auf das Gesamtgewicht der ethylenisch ungesättigten Monomere bezieht.

### Beispiele für Komponente b) sind unter anderem

(Meth)acrylate, die sich von gesättigten Alkoholen ableiten, wie Methyl(meth)acrylat,
Ethyl(meth)acrylat, n-Propyl(meth)acrylat, iso-Propyl(meth)acrylat, n-Butyl(meth)acrylat,
tert-Butyl(meth)acrylat, Pentyl(meth)acrylat, Hexyl(meth)acrylat und Heptyl(meth)acrylat;
Cycloalkyl(meth)acrylate, wie Cyclopentyl(meth)acrylat und Cyclohexyl(meth)acrylat;
(Meth)acrylate, die sich von ungesättigten Alkoholen ableiten, wie 2-Propinyl(meth)acrylat und Allyl(meth)acrylat, Vinyl(meth)acrylat.

(Meth)acrylate gemäß Formel (V) sind dem Fachmann bekannt. Zu diesen zählen unter anderem Hydroxylalkyl(meth)acrylate, wie
3-Hydroxypropylmethacrylat,
3,4-Dihydroxybutylmethacrylat,
2-Hydroxyethylmethacrylat,
2-Hydroxypropylmethacrylat, 2,5-Dimethyl-1,6-hexandiol(meth)acrylat,
1,10-Decandiol(meth)acrylat,
1,2-Propandiol(meth)acrylat;
Polyoxyethylen- und Polyoxypropylen-Derivate der (Meth)acrylsäure, wie
Triethylenglycol(meth)acrylat,
Tetraethylenglycol(meth)acrylat und
Tetrapropylengylcol(meth)acrylat.

Zu den (Meth)acrylaten bzw. (Meth)acrylamiden gemäß Formel (VII) (Komponente d) gehören unter anderem
Amide der (Meth)acrylsäure, wie
N-(3-Dimethylaminopropyl)methacrylamid,
N-(Diethylphosphono)methacrylamid,
1-Methacryloylamido-2-methyl-2-propanol,
N-(3-Dibutylaminopropyl)methacrylamid,
N-t-Butyl-N-(diethylphosphono)methacrylamid,
N,N-bis(2-Diethylaminoethyl)methacrylamid,
4-Methacryloylamido-4-methyl-2-pentanol,
N-(Methoxymethyl)methacrylamid,
N-(2-Hydroxyethyl)methacrylamid,
N-Acetylmethacrylamid,
N-(Dimethylaminoethyl)methacrylamid,
N-Methyl-N-phenylmethacrylamid,
N,N-Diethylmethacrylamid,
N-Methylmethacrylamid,
N,N-Dimethylmethacrylamid,
N-Isopropylmethacrylamid;
Aminoalkylmethacrylate, wie
tris(2-Methacryloxyethyl)amin,
N-Methylformamidoethylmethacrylat,
2-Ureidoethylmethacrylat;
heterocyclische (Meth)acrylate, wie 2-(1-Imidazolyl)ethyl(meth)acrylat,
2-(4-Morpholinyl)ethyl(meth)acrylat und 1-(2-Methacryloyloxyethyl)-2-pyrrolidon.

Die Komponente e) umfaßt insbesondere ethylenisch ungesättigte Monomere, die sich mit den ethylenisch ungesättigten Esterverbindungen der Formeln (II), (III), (IV), (V) und/oder (VII) copolymerisieren lassen. Sie weisen jedoch keine Carbonsäuregruppen, Sulfonsäuregruppen und/oder Phosphonsäuregruppen auf.

Im Rahmen der vorliegenden Erfindung sind Comonomere zur Polymerisation besonders geeignet, die der Formel entsprechen: 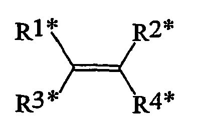 worin R^{1*} und R^{2*} unabhängig ausgewählt sind aus der Gruppe bestehend aus Wasserstoff, Halogene, CN, lineare oder verzweigte Alkylgruppen mit 1 bis 20, vorzugsweise 1 bis 6 und besonders bevorzugt 1 bis 4 Kohlenstoffatomen, welche mit 1 bis (2n+ 1) Halogenatomen substituiert sein können, wobei n die Zahl der Kohlenstoffatome der Alkylgruppe ist (beispielsweise CF₃), α, β- ungesättigte lineare oder verzweigte Alkenyl- oder Alkynylgruppen mit 2 bis 10, vorzugsweise von 2 bis 6 und besonders bevorzugt von 2 bis 4 Kohlenstoffatomen, welche mit 1 bis (2n-1) Halogenatomen, vorzugsweise Chlor, substituiert sein können, wobei n die Zahl der Kohlenstoffatome der Alkylgruppe, beispielsweise CH₂=CCl-, ist, Cycloalkylgruppen mit 3 bis 8 Kohlenstoffatomen, welche mit 1 bis (2n-1) Halogenatomen, vorzugsweise Chlor, substituiert sein können, wobei n die Zahl der Kohlenstoffatome der Cycloalkylgruppe ist; C(=Y*)R^{5*}, C(=Y*)NR^{6*}R^{7*}, Y*C(=Y*)R^{5*}, SOR^{5*}, SO₂R^{5*}, OSO₂R^{5*}, NR^{8*}SO₂R^{5*}, PR^{5*}₂, P(=Y*)R^{5*}₂, Y*PR^{5*}2, Y*P(=Y*)R^{5*}₂, NR^{8*}₂ welche mit einer zusätzlichen R^{8*}-, Aryl- oder Heterocyclyl-Gruppe quaternärisiert sein kann, wobei Y* NR^{8*}, S oder O, vorzugsweise O sein kann; R^{5*} eine Alkylgruppe mit 1 bis 20 Kohlenstoffatomen, eine Alkylthio mit 1 bis 20 Kohlenstoffatomen, Alkoxy von 1 bis 20 Kohlenstoffatomen, Aryloxy oder Heterocyklyloxy ist; R^{6*} und R^{7*} unabhängig Wasserstoff oder eine Alkylgruppe mit 1 bis 20 Kohlenstoffatomen sind, oder R^{6*} und R^{7*} können zusammen eine Alkylengruppe mit 2 bis 7 vorzugsweise 2 bis 5 Kohlenstoffatomen bilden, wobei sie einen 3 bis 8-gliedrigen, vorzugsweise 3 bis 6-gliedrigen Ring bilden, und R^{8*} Wasserstoff, lineare oder verzweigte Alkyl- oder Arylgruppen mit 1 bis 20 Kohlenstoffatomen sind; R^{3*} und R^{4*} unabhängig ausgewählt aus der Gruppe bestehend aus Wasserstoff, Halogen (vorzugsweise Fluor oder Chlor), Alkylgruppen mit 1 bis 6 Kohlenstoffatomen und COOR^{9*}, worin R^{9*} Wasserstoff, ein Alkalimetall oder eine Alkylgruppe mit 1 bis 40 Kohlenstoffatomen ist, sind, oder R^{1*} und R^{3*} können zusammen eine Gruppe der Formel (CH₂)_{n'} bilden, welche mit 1 bis 2n' Halogenatomen oder C₁ bis C₄ Alkylgruppen substituiert sein kann, oder der Formel C(=O)-Y*-C(=O) bilden, wobei n' von 2 bis 6, vorzugsweise 3 oder 4 ist und Y* wie zuvor definiert ist; und wobei zumindest 2 der Reste R^{1*}, R^{2*}, R^{3*} und R^{4*} Wasserstoff oder Halogen sind.

Die Komponente e) umfaßt insbesondere ethylenisch ungesättigte Monomere, die sich mit den Esterverbindungen der Formel (I) copolymerisieren lassen. Hierzu gehören unter anderem
Nitrile der (Meth)acrylsäure und andere stickstoffhaltige Methacrylate, wie Methacryloylamidoacetonitril,
2-Methacryloyloxyethylmethylcyanamid,
Cyanomethylmethacrylat;
Aryl(meth)acrylate, wie Benzylmethacrylat oder
Phenylmethacrylat, wobei die Arylreste jeweils unsubstituiert oder bis zu vierfach substituiert sein können;
carbonylhaltige Methacrylate, wie
Oxazolidinylethylmethacrylat,
N-(Methacryloyloxy)formamid,
Acetonylmethacrylat,
N-Methacryloylmorpholin,
N-Methacryloyl-2-pyrrolidinon;
Glycoldimethacrylate, wie 1,4-Butandiolmethacrylat, 2-Butoxyethylmethacrylat, 2-Ethoxyethoxymethylmethacrylat,
2-Ethoxyethylinethacrylat,
Methacrylate von Etheralkoholen, wie
Tetrahydrofurfurylmethacrylat,
Vinyloxyethoxyethylmethacrylat,
Methoxyethoxyethylmethacrylat,
1-Butoxypropylmethacrylat,
1-Methyl-(2-vinyloxy)ethylmethacrylat,
Cyclohexyloxymethylmethacrylat,
Methoxymethoxyethylmethacrylat,
Benzyloxymethylmethacrylat,
Furfurylmethacrylat,
2-Butoxyethylmethacrylat,
2-Ethoxyethoxymethylmethacrylat,
2-Ethoxyethylmethacrylat,
Allyloxymethylmethacrylat,
1-Ethoxybutylmethacrylat,
Methoxymethylmethacrylat,
1-Ethoxyethylmethacrylat,
Ethoxymethylmethacrylat;
Methacrylate von halogenierten Alkoholen, wie
2,3-Dibromopropylmethacrylat,
4-Bromophenylmethacrylat,
1,3-Dichloro-2-propylmethacrylat,
2-Bromoethylmethacrylat,
2-Iodoethylmethacrylat,
Chlorornethylmethacrylat;
Oxiranylmethacrylate, wie
2,3-Epoxybutylmethacrylat,
3,4-Epoxybutylmethacrylat,
Glycidylmethacrylat;
Phosphor-, Bor- und/oder Silicium-haltige Methacrylate, wie
2-(Dimethylphosphato)propylmethacrylat,
2-(Ethylenphosphito)propylmethacrylat,
Dimethylphosphinomethylmethacrylat,
Dimethylphosphonoethylmethacrylat,
Diethylmethacryloylphosphonat,
Dipropylmethacryloylphosphat;
schwefelhaltige Methacrylate, wie
Ethylsulfinylethylmethacrylat,
4-Thiocyanatobutylmethacrylat,
Ethylsulfonylethylmethacrylat,
Thiocyanatomethylmethacrylat,
Methylsulfinylmethylmethacrylat,
Bis(methacryloyloxyethyl)sulfid;
Trimethacrylate, wie
Trimethyloylpropantrimethacrylat;
Vinylhalogenide, wie beispielsweise Vinylchlorid, Vinylfluorid, Vinylidenchlorid und Vinylidenfluorid;
Vinylester, wie Vinylacetat;
Styrol, substituierte Styrole mit einem Alkylsubstituenten in der Seitenkette, wie z. B. α -Methylstyrol und α-Ethylstyrol, substituierte Styrole mit einem Alkylsubstitutenten am Ring, wie Vinyltoluol und p-Methylstyrol, halogenierte Styrole, wie beispielsweise Monochlorstyrole, Dichlorstyrole, Tribromstyrole und Tetrabromstyrole;
Heterocyclische Vinylverbindungen, wie 2-Vinylpyridin, 3-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, 2-Methyl-1-vinylimidazol, N-Vinylpyrrolidon, 2-Vinylpyrrolidon, N-Vinylpyrrolidin, 3-Vinylpyrrolidin, N-Vinylcaprolactam, N-Vinylbutyrolactam, Vinyloxolan, Vinylfuran, Vinylthiophen, Vinylthiolan, Vinylthiazole und hydrierte Vinylthiazole, Vinyloxazole und hydrierte Vinyloxazole;
Vinyl- und Isoprenylether;
Maleinsäurederivate, wie beispielsweise Diester der Maleinsäure, wobei die Alkoholreste 1 bis 9 Kohlenstoffatome aufweisen, Maleinsäureanhydrid, Methylmaleinsäureanhydrid, Maleinimid, Methylmaleinimid;
Fumarsäurederivate, wie beispielsweise Diester der Fumarsäure, wobei die Alkoholreste 1 bis 9 Kohlenstoffatome aufweisen;
Diene wie beispielsweise Divinylbenzol.

Neben Styrol sind als Comonomere insbesondere Monomere bevorzugt, die dispergierende Wirkungen haben, wie beispielsweise die zuvor genannten heterocyclischen Vinylverbindungen. Diese Monomere werden des weiteren als dispergierende Monomere bezeichnet.

Die zuvor genannten ethylenisch ungesättigten Monomere können einzeln oder als Mischungen eingesetzt werden. Es ist des weiteren möglich, die Monomerzusammensetzung während der Polymerisation zu variieren, um definierte Strukturen, wie beispielsweise Blockcopolymere, zu erhalten.

In bevorzugten Ausführungsformen des erfindungsgemäßen Verfahrens sind mindestens 70 Gewichtsprozent der ethylenisch ungesättigten Monomere, besonders bevorzugt mehr als 80 Gew.-% der ethylenisch ungesättigten Monomere, bezogen auf da Gesamtgewicht der ethylenisch ungesättigten Monomere, (Meth)acrylate, Maleate und/oder Fumarate mit Alkyl- oder Heteroalkylketten, die mindestens 6 Kohlenstoffatome enthalten.

Zur Durchführung der Polymerisation werden Katalysatoren eingesetzt, die mindestens ein Übergangsmetall umfassen. Hierbei kann jede Übergangsmetallverbindung eingesetzt werden, die mit dem Initiator, bzw. der Polymerkette, die eine übertragbare Atomgruppe aufweist, einen Redox-Zyklus bilden kann. Bei diesen Zyklen bilden die übertragbare Atomgruppe und der Katalysator reversibel eine Verbindung, wobei die Oxidationsstufe des Übergangsmetalls erhöht bzw. erniedrigt wird. Man geht davon aus, daß hierbei Radikale freigesetzt bzw. eingefangen werden, so daß die Radikalkonzentration sehr gering bleibt. Es ist allerdings auch möglich, daß durch die Addition der Übergangsmetallverbindung an die Übertragbare Atomgruppe die Insertion von ethylenisch ungesättigten Monomeren in die Bindung Y-X bzw. Y(M)_{z}-X ermöglicht bzw. erleichtert wird, wobei Y und X die zuvor genannten Bedeutung haben und M die Monomeren bezeichnet, während z den Polymerisationsgrad darstellt.

Bevorzugte Übergangsmetalle sind hierbei Cu, Fe, Co, Cr, Ne, Sm, Mn, Mo, Ag, Zn, Pd, Pt, Re, Rh, Ir, In, Yb, und/oder Ru, die in geeigneten Oxidationsstufen eingesetzt werden. Diese Metalle können einzeln sowie als Mischung eingesetzt werden. Es wird angenommen, daß diese Metalle die Redox-Zyklen der Polymerisation katalysieren, wobei beispielsweise das Redoxpaar Cu⁺/Cu²⁺ oder Fe²⁺/Fe³⁺ wirksam ist. Dementsprechend werden die Metallverbindungen als Halogenide, wie beispielsweise Chlorid oder Bromid, als Alkoxid, Hydroxid, Oxid, Sulfat, Phosphat, oder Hexafluorophosphat, Trifluormethansulfat der Reaktionsmischung zugefügt. Zu den bevorzugten metallischen Verbindungen gehören Cu₂O, CuBr, CuCl, CuI, CuN₃, CuSCN, CuCN, CuNO₂, CuNO₃, CuBF₄, Cu(CH₃COO) Cu(CF₃COO), FeBr₂, RuBr₂, CrCl₂ und NiBr₂.

Es können aber auch Verbindungen in höheren Oxidationsstufen, wie beispielsweise CuBr₂, CuCl₂, CuO, CrCl₃, Fe₂O₃ und FeBr₃, eingesetzt werden. In diesen Fällen kann die Reaktion mit Hilfe klassischer Radikalbildner, wie beispielsweise AIBN initiiert werden. Hierbei werden die Übergangsmetallverbindungen zunächst reduziert, da sie mit den aus den klassischen Radikalbildnern erzeugten Radikalen umgesetzt werden. Es handelt sich hierbei um die Reverse-ATRP, wie diese von Wang und Matyjaszewski in Macromolekules (1995), Bd. 28, S. 7572-7573 beschrieben wurde.

Darüber hinaus können die Übergangsmetalle als Metall in der Oxidationsstufe null, insbesondere in Mischung mit den zuvor genannten Verbindungen zur Katalyse verwendet werden, wie dies beispielsweise in WO 98/40415 dargestellt ist. In diesen Fällen läßt sich die Reaktionsgeschwindigkeit der Umsetzung erhöhen. Man nimmt an, daß hierdurch die Konzentration an katalytisch wirksamer Übergangsmetallverbindung erhöht wird, indem Übergangsmetalle in einer hohen Oxidationsstufe mit metallischem Übergangsmetall komproportionieren.

Zu den bevorzugten Übergangsmetallen gehört metallisches Kupfer, das beispielsweise als Kupferblech, Kupferdraht, Kupferfolie, Kupferspäne, Kupfernetz, Kupfergeflecht, Kupfergewebe und/oder Kupferpulver sowie Kupferstaub der Reaktionsmischung zugegeben werden kann. Hierbei sind leicht wieder aus der Polymerzusammensetzung entfernbare Quellen, wie Kupferblech, Kupferdraht, Kupferfolie und Kupfergeflecht gegenüber weniger einfach abtrennbaren Quellen wie Kupferpulver oder Kupferstaub bevorzugt.

Das molare Verhältnis Übergangsmetall zu Initiator liegt im allgemeinen im Bereich von 0,0001:1 bis 10:1, vorzugsweise im Bereich von 0,001:1 bis 5:1 und besonders bevorzugt im Bereich von 0,01:1 bis 2:1, ohne daß hierdurch eine Beschränkung erfolgen soll. Die zuvor genannten Monomere werden mittels Initiatoren, die eine übertragbare Atomgruppe aufweisen, polymerisiert. Im allgemeinen lassen sich diese Initiatoren durch die Formel Y-(X)ₘ beschreiben, wobei Y und X die zuvor genannten Bedeutung haben und m eine ganze Zahl im Bereich von 1 bis 10 darstellt, abhängig von der Funktionalität der Gruppe Y. Falls m > 1 ist, können die verschiedenen übertragbaren Atomgruppen X eine unterschiedliche Bedeutung haben. Ist die Funktionalität des Initiators > 2, so werden sternförmige Polymere erhalten. Bevorzugte übertragbare Atome bzw. Atomgruppen sind Halogene, wie beispielsweise Cl, Br und/oder J.

Wie zuvor erwähnt, wird von der Gruppe Y angenommen, daß sie Radikale bildet, die als Startmolekül dienen, wobei sich dieses Radikal an die ethylenisch ungesättigten Monomere anlagert. Daher weist die Gruppe Y vorzugsweise Substituenten auf, die Radikale stabilisieren können. Zu diesen Substituenten gehören unter anderem -CN, -COR und - CO₂R, wobei R jeweils ein Alkyl- oder Arylrest darstellt, Aryl- und/oder Heteroaryl-Gruppen.

Alkylreste sind gesättigte oder ungesättigte, verzweigte oder lineare Kohlenwasserstoffreste mit 1 bis 40 Kohlenstoffatomen, wie beispielsweise Methyl, Ethyl, Propyl, Butyl, Pentyl, 2-Methylbutyl, Pentenyl, Cyclohexyl, Heptyl, 2-Methylheptenyl, 3-Methylheptyl, Octyl, Nonyl, 3-Ethylnonyl, Decyl, Undecyl, 4-Propenylundecyl, Dodecyl, Tridecyl, Tetradecyl, Pentadecyl, Hexadecyl, Heptadecyl, Octadecyl, Nonadecyl, Eicosyl, Cetyleicosyl, Docosyl und/oder Eicosyltetratriacontyl.

Arylreste sind cyclische, aromatische Reste, die 6 bis 14 Kohlenstoffatome im aromatischen Ring aufweisen. Diese Reste können substituiert sein. Substituenten sind beispielsweise lineare und verzweigte Alkylgruppen mit 1 bis 6 Kohlenstoffatome, wie beispielsweise Methyl, Ethyl, Propyl, Butyl, Pentyl, 2-Methylbutyl oder Hexyl; Cycloalkylgruppen, wie beispielsweise Cyclopentyl und Cyclohexyl; armoatische Gruppen, wie Phenyl oder Nahphthyl; Aminogruppen, Ethergruppen, Estergruppen sowie Halogenide.

Zu den aromatischen Resten gehören beispielsweise Phenyl, Xylyl, Toluyl, Naphtyl oder Biphenylyl.

Der Ausdruck "Heteroaryl" kennzeichnet ein heteroaromatisches Ringsystem, worin mindestens eine CH-Gruppe durch N oder zwei benachbarte CH-Gruppen durch S, O oder NH ersetzt sind, wie ein Rest von Thiophen, Furan, Pyrrol, Thiazol, Oxazol, Pyridin, Pyrimidin und Benzo[a]furan, die ebenfalls die zuvor genannten Substituenten aufweisen können.

Ein erfindungsgemäß verwendbarer Initiator kann jede Verbindung sein, die ein oder mehrere Atome oder Atomgruppen aufweist, welche unter den Polymerisationsbedingungen radikalisch übertragbar ist.

Geeignete Initiatoren umfassen jene der Formeln:

R¹¹R¹²R¹³C-X

R¹¹C(=O)-X

R¹¹R¹²R¹³Si-X

R¹¹R¹²N-X

R¹¹N-X₂

(R¹¹)ₙP(O)ₘ-X₃₋ₙ

(R¹¹O)ₙP(O)ₘ-X₃₋ₙ

und

(R¹¹)(R¹²O)P(O)ₘ-X,

worin X ausgewählt ist aus der Gruppe bestehend aus Cl, Br, I, OR¹⁰, [wobei R¹⁰ eine Alkylgruppe von 1 bis 20 Kohlenstoffatomen, wobei jedes Wasserstoffatom unabhängig durch ein Halogenid, vorzugsweise Flurid oder Chlorid ersetzt sein kann, Alkenyl von 2 bis 20 Kohlenstoffatomen, vorzugsweise Vinyl, Alkynyl von 2 bis 10 Kohlenstoffatomen vorzugsweise Acetylenyl, Phenyl, welches mit 1 bis 10 Halogenatomen oder Alkylgruppen mit 1 bis 4 Kohlenstoffatomen substituiert sein kann, oder Aralkyl (arylsubstituiertes Alkyl in welchem die Arylgruppe Phenyl oder substituiertes Phenyl und die Alkylgruppe ein Alkyl mit 1 bis 6 Kohlenstoffatomen darstellt, wie beispielsweise Benzyl) bedeutet;] SR¹⁴, SeR¹⁴, OC(=O)R¹⁴, OP(=O)R¹⁴, OP(=O)(OR¹⁴)₂, OP(=O)OR¹⁴, O-N(R¹⁴)₂, S-C(=S)N(R¹⁴)₂, CN, NC, SCN, CNS, OCN, CNO und N₃ darstellt, wobei R¹⁴ eine Arylgruppe oder eine lineare oder verzweigte Alkylgruppe mit 1 bis 20, vorzugsweise 1 bis 9 Kohlenstoffatomen bedeutet, wobei zwei R¹⁴-Gruppen, falls vorhanden, zusammen einen 5, 6 oder 7-gliedrigen heterocyclischen Ring bilden können; und
R¹¹, R¹² und R¹³ unabhängig ausgewählt sind aus der Gruppe bestehend aus Wasserstoff, Halogene, Alkylgruppen mit 1 bis 20, vorzugsweise 1 bis 10 und besonders bevorzugt 1 bis 6 Kohlenstoffatomen, Cycloalkylgruppen mit 3 bis 8 Kohlenstoffatomen, R^{8*}₃Si, C(=Y*)R^{5*}, C(=Y*)NR^{6*}R^{7*}, wobei Y*, R^{5*}, R^{6*} und R^{7*} wie zuvor definiert sind, COCl, OH, (vorzugsweise ist einer der Reste R¹¹, R¹² und R¹³ OH), CN, Alkenyl- oder Alkynylgruppen mit 2 bis 20 Kohlenstoffatomen, vorzugsweise 2 bis 6 Kohlenstoffatomen und besonders bevorzugt Allyl oder Vinyl, Oxiranyl, Glycidyl, Alkylen- oder Alkenylengruppen mit 2 bis 6 Kohlenstoffatomen, welche mit Oxiranyl oder Glycidyl, Aryl, Heterocyclyl, Aralkyl, Aralkenyl (arylsubsituiertes Alkenyl, wobei Aryl wie zuvor definiert ist und Alkenyl Vinyl ist, welches mit ein oder zwei C₁ bis C₆ Alkylgruppen und/oder Halogenatomen, vorzugsweise mit Chlor substituiert ist) substituiert sind, Alkylgruppen mit 1 bis 6 Kohlenstoffatomen, in welchen ein bis alle der Wasserstoffatome, vorzugsweise eines, durch Halogen substituiert sind, (vorzugsweise Fluor oder Chlor, wenn ein oder mehr Wasserstoffatome ersetzt sind, und vorzugsweise Fluor, Chlor oder Brom, falls ein Wasserstoffatom ersetzt ist) Alkylgruppen mit 1 bis 6 Kohlenstoffatomen, die mit 1 bis 3 Substituenten (vorzugsweise 1) ausgewählt aus der Gruppe bestehend aus C₁-C₄ Alkoxy, Aryl, Heterocyclyl, C(=Y*)R^{5*} (wobei R^{5*} wie zuvor definiert ist), C(=Y*)NR^{6*}R^{7*} (wobei R^{6*} und R^{7*} wie zuvor definiert sind), Oxiranyl und Glycidyl substituiert sind; (vorzugsweise sind nicht mehr als 2 der Reste R¹¹, R¹² und R¹³ Wasserstoff, besonders bevorzugt ist maximal einer der Reste R¹¹, R¹² und R¹³ Wasserstoff); m=0 oder 1; und m=0, 1 oder 2 darstellt.

Zu den besonders bevorzugten Initiatoren gehören Benzylhalogenide, wie p-Chlormethylstyrol, α-Dichlorxylol, α,α-Dichlorxylol, α,α-Dibromxylol und Hexakis(α-brommethyl)benzol, Benzylchlorid, Benzylbromid, 1-Brom-1-phenylethan und 1-Chlor-1-phenylethan;
Carbonsäurederivate, die an der α-Position halogeniert sind, wie beispielsweise Propyl-2-brompropionat, Methyl-2-chlorpropionat, Ethyl-2-chlorpropionat, Methyl-2-brompropionat, Ethyl-2-bromisobutyrat;
Tosylhalogenide, wie p-Toluolsulfonylchlorid; Alkylhalogenide, wie Tetrachlormethan, Tribrommethan, 1-Vinylethylchlorid, 1-Vinylethylbromid; und Halogenderivate von Phosphorsäureestern, wie Dimethylphosphorsäurechlorid.

Der Initiator wird im allgemeinen in einer Konzentration im Bereich von 10⁻⁴ mol/L bis 3 mol/L, vorzugsweise im Bereich von 10⁻³ mol/L bis 10⁻¹ mol/L und besonders bevorzugt im Bereich von 5*10⁻² mol/L bis 5*10⁻¹ mol/L eingesetzt, ohne daß hierdurch eine Beschränkung erfolgen soll. Aus dem Verhältnis Initiator zu Monomer ergibt sich das Molekulargewicht des Polymeren, falls das gesamte Monomer umgesetzt wird. Vorzugsweise liegt dieses Verhältnis im Bereich von 10⁻⁴ zu 1 bis 0,5 zu 1, besonders bevorzugt im Bereich von 1*10⁻³ zu 1 bis 5*10⁻² zu 1.

Die Polymerisation findet in Gegenwart von Liganden statt, die mit dem oder den metallischen Katalysatoren eine Koordinationsverbindung bilden können. Diese Liganden dienen unter anderem zur Erhöhung der Löslichkeit der Übergangsmetallverbindung. Eine weitere wichtige Funktion der Liganden besteht darin, daß die Bildung von stabilen Organometallverbindungen vermieden wird. Dies ist besonders wichtig, da diese stabilen Verbindungen bei den gewählten Reaktionsbedingungen nicht polymerisieren würden. Des weiteren wird angenommen, daß die Liganden die Abstraktion der übertragbaren Atomgruppe erleichtern.

Diese Liganden sind an sich bekannt und beispielsweise in WO 97/18247, WO 98/40415 beschrieben. Diese Verbindungen weisen im allgemeinen ein oder mehrere Stickstoff-, Sauerstoff-, Phosphor- und/oder Schwefelatome auf, über die das Metallatom gebunden werden kann. Viele dieser Liganden lassen sich im allgemeinen durch die Formel R¹⁶-Z-(R¹⁸-Z)ₘ-R¹⁷ darstellen, worin R¹⁶ und R¹⁷ unabhängig H, C₁ bis C₂₀ Alkyl, Aryl, Heterocyclyl bedeuten, die ggf. substituiert sein können. Zu diesen Substituenten zählen u.
a. Alkoxyreste und die Alkylaminoreste. R¹⁶ und R¹⁷ können ggf. einen gesättigten, ungesättigten oder heterocyclischen Ring bilden. Z bedeutet O, S, NH, NR¹⁹ oder PR¹⁹, wobei R¹⁹ die gleiche Bedeutung wie R¹⁶ hat. R¹⁸ bedeutet unabhängig eine divalente Gruppe mit 1 bis 40 C-Atomen, vorzugsweise 2 bis 4 C-Atomen, die linear, verzweigt oder cyclisch sein kann, wie beispielsweise eine Methylen-, Ethylen-, Propylen- oder Butylengruppe. Die Bedeutung von Alkyl und Aryl wurde zuvor dargelegt. Heterocyclylreste sind cyclische Reste mit 4 bis 12 Kohlenstoffatome, bei denen ein oder mehrere der CH₂-Gruppen des Ringes durch Heteroatomgruppen, wie O, S, NH, und/oder NR, ersetzt sind, wobei der Rest R, die gleich Bedeutung hat, wie R¹⁶ hat.

Eine weitere Gruppe von geeigneten Liganden läßt sich durch die Formel 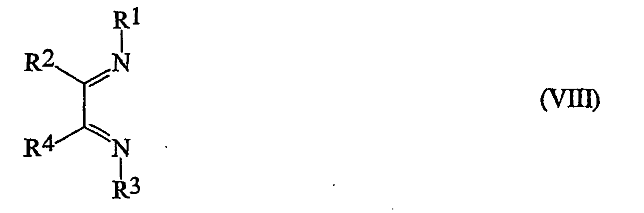 darstellen, worin R¹, R², R³ und R⁴ unabhängig H, C₁ bis C₂₀ Alkyl-, Aryl-, Heterocyclyl- und/oder Heteroarylrest bedeuten, wobei die Reste R¹ und R² bzw. R³ und R⁴ zusammen einen gesättigten oder ungesättigten Ring bilden können.

Bevorzugte Liganden sind hierbei Chelatliganden, die N-Atome enthalten.

Zu den bevorzugten Liganden gehören unter anderem Triphenylphosphan, 2,2-Bipyridin, Alkyl-2,2-bipyridin, wie 4,4-Di-(5-nonyl)-2,2-bipyridin, 4,4-Di-(5-heptyl)-2,2 Bipyridin, Tris(2-aminoethyl)amin (TREN), N,N,N',N',N"-Pentamethyldiethylentriamin, 1,1,4,7,10,10-Hexamethyltriethlyentetramin und/oder Tetramethylethylendiamin. Weitere bevorzugte Liganden sind beispielsweise in WO 97/47661 beschrieben. Die Liganden können einzeln oder als Mischung eingesetzt werden.

Diese Liganden können in situ mit dem Übergangsmetall, insbesondere mit Kupfer, oder den Übergangsmetallverbindungen Koordinationsverbindungen bilden oder sie können zunächst als Koordinationsverbindungen hergestellt werden und anschließend in die Reaktionsmischung gegeben werden.

Das Verhältnis Ligand zu Übergangsmetall ist abhängig von der Zähnigkeit des Liganden und der Koordinationszahl des Übergangsmetalls. Im allgemeinen liegt das molare Verhältnis im Bereich 100:1 bis 0,1:1, zweckmäßig 10: 1 bis 0,1:1, vorzugsweise 6:1 bis 0,1:1 und besonders bevorzugt 3:1 bis 0,5:1, ohne daß hierdurch eine Beschränkung erfolgen soll.

Je nach erwünschter Polymerlösung werden die Monomere, die Übergangsmetallkatalysatoren, die Liganden und die Initiatoren ausgewählt. Es wird angenommen, daß eine hohe Geschwindigkeitskonstante der Reaktion zwischen dem Übergangsmetall-Ligand-Komplex und der übertragbaren Atomgruppe wesentlich für eine enge Molekulargewichtsverteilung ist. Ist die Geschwindigkeitskonstante dieser Reaktion zu gering, so wird die Konzentration an Radikalen zu hoch, so daß die typischen Abbruchreaktionen auftreten, die für eine breite Molekulargewichtsverteilung verantwortlich sind. Die Austauschrate ist beispielsweise abhängig von der übertragbaren Atomgruppe, dem Übergangsmetall und den Liganden.

Die Polymerisation als Teilschritt des vorliegenden Herstellverfahrens kann mit oder ohne Lösungsmittel durchgeführt werden. Kennzeichnend für das Verfahren ist, daß man den Katalysator durch Filtrieren in Gegenwart mindestens eines Filtrierhilfsmittels mindestens teilweise abtrennt, welches mindestens 0,5 Gew.-% wiederkehrende Einheiten bezogen auf das Gesamtgewicht des Filtrierhilfmittels enthält, die mindestens eine Carbonsäuregruppe, Sulfonsäuregruppe und/oder mindestens eine Phosphonsäuregruppe aufweisen.

Dementsprechend kann ein Lösungsmittel vor dem Filtrieren aber nach der Polymerisation zugegeben werden, oder aber die Polymerisation findet in Gegenwart eines Lösungsmittels statt. Der Begriff des Lösungsmittels ist hierbei weit zu verstehen. Nicht umgesetzte Monomere, die nach der Polymerisation in der Zusammensetzung verblieben sind, können beispielsweise auch als Lösungsmittel dienen.
Vorzugsweise wird die Polymerisation in einem unpolaren Lösungsmittel durchgeführt. Hierzu gehören Kohlenwasserstofflösungsmittel, wie beispielsweise aromatische Lösungsmittel, wie Toluol, Benzol und Xylol, gesättigte Kohlenwasserstoffe, wie beispielsweise Cyclohexan, Heptan, Octan, Nonan, Decan, Dodecan, die auch verzweigt vorliegen können. Diese Lösungsmittel können einzeln sowie als Mischung verwendet werden. Besonders bevorzugte Lösungsmittel sind Mineralöle und synthetische Öle sowie Mischungen hiervon. Von diesen sind Mineralöle ganz besonders bevorzugt.

Mineralöle sind an sich bekannt und kommerziell erhältlich. Sie werden im allgemeinen aus Erdöl oder Rohöl durch Destillation und/oder Raffination und gegebenenfalls weitere Reinigungs- und Veredelungsverfahren gewonnen, wobei unter den Begriff Mineralöl insbesondere die höhersiedenden Anteile des Roh- oder Erdöls fallen. Im allgemeinen liegt der Siedepunkt von Mineralöl höher als 200 °C, vorzugsweise höher als 300 °C, bei 5000 Pa. Die Herstellung durch Schwelen von Schieferöl, Verkoken von Steinkohle, Destillation unter Luftabschluß von Braunkohle sowie Hydrieren von Stein- oder Braunkohle ist ebenfalls möglich. Zu einem geringen Anteil werden Mineralöle auch aus Rohstoffen pflanzlichen (z. B. aus Jojoba, Raps) od. tierischen (z. B. Klauenöl) Ursprungs hergestellt. Dementsprechend weisen Mineralöle, je nach Herkunft unterschiedliche Anteile an aromatischen, cyclischen, verzweigten und linearen Kohlenwasserstoffen auf.

Im allgemeinen unterscheidet man paraffinbasische, naphthenische und aromatische Anteile in Rohölen bzw. Mineralölen, wobei die Begriffe paraffinbasischer Anteil für längerkettig bzw. stark verzweigte iso-Alkane und naphthenischer Anteil für Cycloalkane stehen. Darüber hinaus weisen Mineralöle, je nach Herkunft und Veredelung unterschiedliche Anteile an n-Alkanen, iso-Alkanen mit einem geringen Verzweigungsgrad, sogenannte monomethylverzweigten Paraffine, und Verbindungen mit Heteroatomen, insbesondere O, N und/oder S auf, denen polare Eigenschaften zugesprochen werden. Der Anteil der n-Alkane beträgt in bevorzugten Mineralölen weniger als 3 Gew.-%, der Anteil der O, N und/oder S-haltigen Verbindungen weniger als 6 Gew.-%. Der Anteil der Aromaten und der monomethylverzweigten Paraffine liegt im allgemeinen jeweils im Bereich von 0 bis 30 Gew.-%. Gemäß einem interessanten Aspekt umfaßt Mineralöl hauptsächlich naphthenische und paraffinbasische Alkane, die im allgemeinen mehr als 13, bevorzugt mehr als 18 und ganz besonders bevorzugt mehr als 20 Kohlenstoffatome aufweisen. Der Anteil dieser Verbindungen ist im allgemeinen ≥ 60 Gew.-%, vorzugsweise ≥ 80 Gew.-%, ohne daß hierdurch eine Beschränkung erfolgen soll.

Eine Analyse von besonders bevorzugten Mineralölen, die mittels herkömmlicher Verfahren, wie Harnstofftrennung und Flüssigkeitschromatographie an Kieselgel, erfolgte, zeigt beispielsweise folgende Bestandteile, wobei sich die Prozentangaben auf das Gesamtgewicht des jeweils eingesetzten Mineralöls beziehen:
n-Alkane mit ca. 18 bis 31 C-Atome:
0,7 - 1,0 %,
gering verzweigte Alkane mit 18 bis 31 C-Atome:
1,0-8,0%,
Aromaten mit 14 bis 32 C-Atomen:
0,4-10,7%,
Iso- und Cyclo-Alkane mit 20 bis 32 C-Atomen:
60,7- 82,4 %,
polare Verbindungen:
0,1 - 0, 8 % ,
Verlust:
6,9 - 19,4 %.

Wertvolle Hinweise hinsichtlich der Analyse von Mineralölen sowie eine Aufzählung von Mineralölen, die eine abweichende Zusammensetzung aufweisen, findet sich beispielsweise in Ullmanns Encyclopedia of Industrial Chemistry, 5^{th} Edition on CD-ROM, 1997, Stichwort "lubricants and related products".

Synthetische Öle sind unter anderem organische Ester, organische Ether, wie Siliconöle, und synthetische Kohlenwasserstoffe, insbesondere Polyolefine. Sie sind meist etwas teurer als die mineralischen Öle, haben aber Vorteile hinsichtlich ihrer Leistungsfähigkeit. Zur Verdeutlichung soll noch auf die 5 API-Klassen der Grundöltypen (API: American Petroleum Institute) hingewiesen werden, wobei diese Grundöle besonders bevorzugt als Lösungsmittel eingesetzt werden können.

Diese Lösungsmittel werden vor oder während der Filtration, vorzugsweise in einer Menge von 1 bis 99 Gew.-%, besonders bevorzugt von 5 bis 95 Gew.-% und ganz besonders bevorzugt von 10 bis 60 Gew.-%, bezogen auf das Gesamtgewicht der Mischung, eingesetzt.

Die Polymerisation kann bei Normaldruck, Unter- oder Überdruck durchgeführt werden. Auch die Polymerisationstemperatur ist unkritisch. Im allgemeinen liegt sie jedoch im Bereich von -20° - 200°C, vorzugsweise 0° - 130°C und besonders bevorzugt 60° - 120°C, ohne daß hierdurch eine Beschränkung erfolgen soll.

Mit Hilfe des vorliegenden Verfahrens können Polymere mit einer vorgegebenen Architektur auf einfache Weise erhalten werden. Diese Möglichkeiten ergeben sich aus dem "lebenden" Charakter des Polymerisationsveifahrens. Zu diesen Strukturen gehören unter anderem Blockcopolymere, wie Diblock- und Triblockcopolymere, Gradientencopolymere, Stempolymere, hochverzweigte Polymere, Polymere mit reaktiven Endgruppen und Pfropfcopolymere. Die so hergestellten Polymere weisen im allgemeinen ein Molekulargewicht im Bereich von 1.000 bis 1.000.000 g/mol, vorzugsweise im Bereich von 10*10³ bis 500*10³ g/mol, zweckmäßig 10*10³ bis 300*10³ g/mol und besonders bevorzugt im Bereich von 20*10³ bis 300*10³ g/mol, auf, ohne daß hierdurch eine Beschränkung erfolgen soll. Diese Werte beziehen sich auf das Gewichtsmittel des Molekulargewichts der polydispersen Polymere in der Zusammensetzung.

Eine besonders zweckmäßige Variante des Verfahrens gemäß der Erfindung ist dadurch gekennzeichnet, daß man Polymere mit einem Gewichtsmittel des Molekulargewichts ≥ 7.000 g/mol, herstellt.

Der besondere Vorteil von ATRP im Vergleich zur herkömmlichen radikalischen Polymerisationsverfahren besteht darin, daß Polymere mit enger Molekulargewichtsverteilung hergestellt werden können. Ohne daß hierdurch eine Beschränkung erfolgen soll, weisen Polymere, die nach dem erfindungsgemäßen Verfahren erhalten wurden, eine Polydispersität, die durch M_{w}/Mₙ gegeben ist, im Bereich von 1 bis 12, vorzugsweise 1 bis 4,5, besonders bevorzugt 1 bis 3 und ganz besonders bevorzugt 1,05 bis 2 auf.

Im Rahmen der vorliegenden Erfindung wird der Katalysator durch Filtration entfernt.
Diese hat sich im Vergleich mit anderen Fest-Flüssig-Trennverfahren wie Chromatographie und Zentrifugation als ganz besonders erwiesen.

Das Filtrieren ist an sich bekannt und beispielsweise in Ullmann's Encyclopedia of Industrial Chemistry, Fifth Edition, Stichwort "Filtration", beschrieben. Hierunter wird im Rahmen der vorliegenden Erfindung das Abscheiden von Feststoffteilchen aus einer Flüssigkeit mit Hilfe einer porösen Schicht (Filtermittel), die für die Flüssigkeit durchlässig ist, während die Feststoffe zurückgehalten werden, verstanden. Es wird angenommen, daß die Trennung aufgrund der Größenunterschiede erfolgt.

Die Filtermittel bestehen unter anderem aus losen oder verfestigten Feststoffschichten, wie beispielsweise Schüttungen aus Sand, Koks, Kieselgur, Kunststoffen; Filtersteine aus Quarz, Schamotte, Kohle, Kunststoffen, Gewebe oder Vliese aus Metall-, Natur-, Kunst- und Glasfasern; Sinterstoffe aus Metall-, Porzellan Glas- und anderen Pulvern.

Erfindungsgemäß erfolgt die Filtration in Gegenwart mindestens eines Filterhilfsmittels, welches den Zweck hat, bei Suspensionen mit nur wenig Feststoffen die Bildung eines Filterkuchens zu ermöglichen. Die Filtrierhilfsmittel werden dabei entweder der zu filtrierenden Suspension unmittelbar zugesetzt oder vor der Filtration als Hilfsschicht auf dem Filter gebildet. Das erfindungsgemäß eingesetzte Filtrierhilfsmittel weist mindestens 0,5 Gew.-% wiederkehrende Einheiten bezogen auf das Gesamtgewicht des Filtrierhilfsmittels auf, die mindestens eine Carbonsäuregruppe

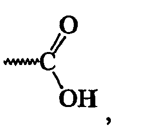

Sulfonsäuregruppe 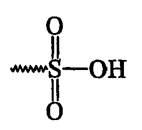 und/oder mindestens eine Phosphonsäuregruppe 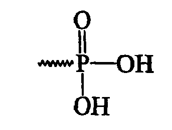 enthalten. Dabei bezeichnet der Begriff "wiederkehrende Einheiten" im Rahmen der vorliegenden Erfindung die Grundbausteine, aus denen ein Polymer durch vielfache Wiederholung aufgebaut ist. Homopolymere leiten sich von nur einer wiederkehrenden Einheit ab, Copolymere weisen mindestens zwei unterschiedliche wiederkehrende Einheiten auf.

Zu den erfindungsgemäß einsetzbaren Filtrierhilfsmitteln gehören unter anderem
(1) Polymere und/oder Copolymere ethylenisch ungesättigter organischer Verbindungen, die die mindestens eine Carbonsäuregruppe, Sulfonsäuregruppe und/oder mindestens eine Phosphonsäuregruppe enthalten,
(2) Polymere und/oder Copolymere, in welche durch polymeranaloge Reaktionen die erforderliche Menge an Carbonsäuregruppen, Sulfonsäuregruppen und/oder Phosphonsäuregruppe eingebracht wurden, sowie
(3) Polykondensate Carbonsäuregruppen, Sulfonsäuregruppen und/oder Phosphonsäuregruppen-haltiger Monomere.

Polymere und/oder Copolymere vom Typ (1), die im Rahmen der vorliegenden Erfindung besonders bevorzugt werden, umfassen unter anderem Polymere und/oder Copolymere, die sich von den vorstehend genannten ethylenisch ungesättigten Monomeren mit mindestens einer Carbonsäuregruppe, Sulfonsäuregruppe und/oder mindestens einer Phosphonsäuregruppe ableiten.

Die Polymerisation dieser ethylenisch ungesättigten Monomeren mit mindestens einer Carbonsäuregruppe, Sulfonsäuregruppe und/oder mindestens einer Phosphonsäuregruppe kann gegebenenfalls in Gegenwart weiterer ethylenisch ungesättigter Monomere erfolgen. Einsetzbare Comonomere umfassen die vorstehend genannten ethylenisch ungesättigten Monomere vom Typ a) bis e). Besonders bewährt hat sich ein Filtrierhilfsmittel, welches durch Polymerisation der folgenden Monomerzusammensetzung erhältlich ist
I) 0,5 - 20 Gew.-%, bezogen auf das Gesamtgewicht der Monomerzusammensetzung, einer oder mehrerer der vorstehend genannten ethylenisch ungesättigten Verbindungen mit mindestens einer Carbonsäuregruppe, Sulfonsäuregruppe und/oder mindestens einer Phosphonsäuregruppe und
II) 99,5 - 80 Gew.-%, bezogen auf das Gesamtgewicht der Monomerzusammensetzung, einer oder mehrerer ethylenisch ungesättigten Esterverbindungen der Formel (IX) 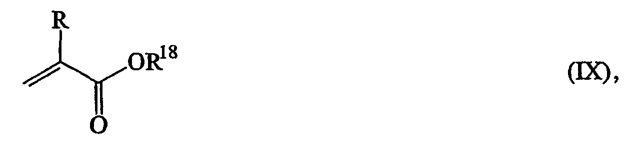 worin R Wasserstoff oder Methyl und R¹⁸ einen linearen oder verzweigten Alkylrest mit 1 bis 18 Kohlenstoffatomen bedeuten, und
wobei die Summe der Verbindungen I) und II) 100 Gew.-% ergibt.

Die Polymerisation dieser ethylenisch ungesättigten Monomeren mit mindestens einer Carbonsäuregruppe, Sulfonsäuregruppe und/oder mindestens einer Phosphonsäuregruppe kann an sich bekannte Weise erfolgen. Denkbar ist beispielsweise die radikalische Polymerisation in Substanz, Lösung, Emulsion oder Suspension, die anionische oder kationische Polymerisation, vorzugsweise in Lösung, oder eine Polymerisation gemäß Ziegler-Natta. Auch die Durchführung kontrollierter radikalischer Polymerisationen, wie ATRP-Verfahren, RAFT-Verfahren und TEMPO-Verfahren, ist möglich.

Polymere und/oder Copolymere vom Typ (2) sind durch Umsetzung organischer Polymere, wie beispielsweise Polystyrol, Polymethylstyrol, Tetrafluoropropylen mit entsprechenden Funktionalisierungsreagenzien, wie SO₃ oder Oxidationsmitteln, auf an sich bekannte Weise zugänglich. Sie umfassen beispielsweise carboxyliertes oder sulfoniertes Polystyrol, sulfoniertes Tetrafluorpropylen, Polyisobutylensulfonat, sulfoniertes Polyethylen, sulfoniertes Polyethylen-co-propylen und sulfoniertes Polypropylen.

Zu den Polymere und/oder Copolymere vom Typ (3) gehören unter anderem Polykondensate die durch Umsetzung von aliphatischen, cycloaliphatischen oder aromatischen Diolen mit aliphatischen, cycloaliphatischen oder aromatischen Dicarbonsäuren, durch Umsetzung von aliphatischen, cycloaliphatischen oder aromatischen, primären oder sekundären Diaminen mit aliphatischen, cycloaliphatischen oder aromatischen Dicarbonsäuren, durch Umsetzung von aliphatischen, cycloaliphatischen oder aromatischen Diole mit aliphatischen, cycloaliphatischen oder aromatischen Düsocyanaten, durch Umsetzung von aliphatischen, cycloaliphatischen oder aromatischen, primären oder sekundären Diaminen mit aliphatischen, cycloaliphatischen oder aromatischen Düsocyanaten, oder durch Polykondensation von primäre oder sekundäre Aminogruppen oder Hydroxygruppen enthaltenden Carbonsäuren erhältlich sind. Dabei weisen die eingesetzen Verbindungen zumindest teilweise mindestens Carbonsäuregruppen, Sulfonsäuregruppen und/oder Phosphonsäuregruppen auf, die im Zuge der Polykondensation nicht umgesetzt werden.

Zu dieser Gruppe von Polymeren und/pder Copolymeren gehören unter anderem Polyasparaginsäure, Polyglutaminsäure, Copolykondensate aus Asparaginsäure und einer alipatischen, cycloaliphatischen oder aromatischen Hydroxycarbonsäure, wie beispielsweise Milchsäure, Copolykondensate aus Glutaminsäure und einer alipatischen, cycloaliphatischen oder aromatischen Hydroxycarbonsäure, wie beispielsweis Milchsäure, und Polyzitronensäure.

Im Rahmen der vorliegenden Erfindung hat es sich als überaus günstig erwiesen, daß das mindestens eine Filtrierhilfsmittel unvernetzt ist, d. h. es liegt vorzugsweise nicht als dreidimensionales polymeres Netzwerk vor. Besonders vorteilhafte Ergebnisse können unter Verwendung eines Filtrierhilfsmittels erzielt werden, welches ein Gewichtsmittel des Molekulargewichts größer 300*10³ g/mol, zweckmäßigerweise größer 500*10³ g/mol, insbesondere größer 1.000*10³ g/mol aufweist. Weiterhin besitzt das Filtrierhilfsmittel vorzugsweise ein höheres Gewichtsmittel des Molekulargewichts als die Polymerzusammensetzung.

Unter Umständen ist es zweckmäßig, die Wirkung des mindestens einen erfindungsgemäßen Filtrierhilfsmittels noch weiter zu verbessern, indem man der Polymerzusammensetzung weitere an sich bekannte Filtrierhilfsmittel, wie Cellulose, Kieselgel, Kieselgur (z. B. ® Celite), Bleicherde (z. B. ®Tonsil), Perlit, Holzkohle und Holzmehl, zusetzt.
Die Filtration kann über an sich bekannte Filtrationsverfahren, wie Sieben, insbesondere mit Membranen und Mikrofiltem, Kuchenfiltration, bei der ein Filterkuchen aufgebaut wird, und Tiefenfiltration, bei der der Feststoff im Filter abgelagert wird, erfolgen. Hierbei kann die Filtration chargenweise oder kontinuierlich durchgeführt werden, wobei eine kontinuierliche Filtration im allgemeinen eine Reinigung des Filters während des Filtrierens erforderlich macht, wie dies beispielsweise bei einer Cross-Flow-Filtration erfolgt.

Die Art des Filterelements ist unkritisch. Der Fachmann wird aufgrund seines Wissens ein entsprechendes auswählen. Zu den bekannten Filterelementen gehören Beutelfilter, Bandfilter, Kerzenfilter, Scheibenfilter, Plattenfilter, Trommelfilter, Blattfilter und Röhrenfilter.

Ein wesentliches Element der Filtration ist ein Druckunterschied, der die Flüssigkeit durch das Filtermedium leitet. Dieser Druckunterschied kann auf jede in der Technik bekannte Weise erzeugt werden. Hierzu gehören Pumpen, die sowohl einen Überdruck als auch einen Unterdruck aufbauen können. Darüber hinaus kann die Flüssigkeit auch direkt durch den Filter gepreßt werden. Je nach Viskosität kann auch eine Höhendifferenz für ein Fließen der Zusammensetzung durch den Filter genügen.

Vorrichtungen zur Durchführung der Filtration sind weithin bekannt und kommerziell erhältlich.

Vorzugsweise wird die Zusammensetzung bei einer Druckdifferenz im Bereich von 0,1 bis 50 bar, vorzugsweise 1 bis 10 bar und besonders bevorzugt 1,5 bis 2,5 bar mit einem Filter einer Siebgröße im Bereich von 0,01 µm bis 1 mm, vorzugsweise 1 µm bis 100 µm und besonders bevorzugt 10 µm bis 100 µm gereinigt. Diese Angaben dienen als Anhaltspunkte, da die Reinigung auch von der Viskosität des Lösungsmittels und der Korngröße des Niederschlags abhängig ist.

Die Filtration findet in einem ähnlichen Temperaturbereich wie die Polymerisation statt, wobei der obere Bereich von der Stabilität des Polymeren abhängig ist. Die untere Grenze ergibt sich aus der Viskosität der Lösung. In einer besonders bevorzugten Ausführungsform der vorliegenden Erfindung erfolgt die Filtration im Bereich von 90 bis 130°C.

Die durch das erfindungsgemäße Verfahren erhältlichen Polymerzusammensetzungen zeichnen sich durch einen besonders niedrigen Katalysatorgehalt aus. Vorzugsweise ist der Katalysatoranteil der Polymerzusammensetzungen ≤ 1000 ppm, zweckmäßigerweise ≤ 100 ppm, insbesondere < 8 ppm.

Die erfindungsgemäßen Polymerzusammensetzungen können ohne weitere Reinigung beispielsweise als Additiv in Schmierölen verwendet werden. Darüber hinaus kann aus der Zusammensetzung das Polymer isoliert werden. Hierzu können die Polymere durch Fällung aus der Zusammensetzung abgeschieden werden.

Nachfolgend wird die Erfindung durch Beispiele und Vergleichsbeispiele eingehender erläutert, ohne daß die Erfindung auf diese Beispiele beschränkt werden soll.

### a) Synthese der zu filtrierenden Polymermischungen:

Gemäß der nachfolgenden allgemeinen Versuchsvorschrift wurden die Polymerisationsansätze 1 bis 10 durchgeführt.

Die ATRP-Polymerisationsversuche wurden in einem Vierhalsrundkolben durchgeführt, der mit Säbelrührer, Heizpilz, Stickstoffüberleitung und Intensivkühler ausgestattet war. Dabei wurde das Monomergemisch und das jeweilige Lösungsmittel im Reaktionskolben vorgelegt und durch Trockeneiszugabe und Überleiten von Stickstoff inertisiert. Anschließend wurde die entsprechende Menge an Katalysator, CuCl oder Cu(0), und Ligand (Pentamethyldiethylentriamin (PMDETA)) zugegeben.

Nach Aufheizen auf die 90°C wurde die entsprechende Menge Initiator (Ethyl-2-bromisobutyrat (Ebib)) zugegeben. Die Temperatur im Reaktionskolben wurde auf 100 °C erhöht. Nach einer Reaktionszeit von ca. 20 Stunden wurde die Mischung auf Raumtemperatur abgekühlt.

Die Mengen der jeweils eingesetzten Komponenten sind in Tabelle 1 dargelegt. In Tabelle 1 bezeichnet SM 920 ein von der Firma Shell AG erhältliches Mineralöl mit einer Dielektrizitätskonstante von 2,1. MMA bezeichnet Methylmethacrylat. DPMA wurde durch die Reaktion von ®Dobanol 25L (von Shell AG) mit Methylmethacrylat erhalten. SMA wurde durch die Umsetzung von ®Dehydad (von Henkel KGaA) mit Methylmethacrylat erhalten. Bei diesen Reaktionen wurde freigesetztes Methanol abgetrennt.

**Tabelle 1: Mengen der jeweils eingesetzten Komponenten**

| **Ansatz** | **Monomermischung [g]** | **Lösungsmittel [g]** | **Katalysator** | **Ligand** | **Initiator** |
|---|---|---|---|---|---|
| 1 | DPMA:MMA 85:15 | SM 920 25 | CuCl | PMDETA | Ebib |
| 2 | DPMA:MMA 85:15 | SM 920 25 | CuCl | PMDETA | Ebib |
| 3 | DPMA:MMA 85:15 | SM 920 25 | CuCl | PMDETA | Ebib |
| 4 | DPMA:MMA 85:15 | SM 920 25 | CuCl | PMDETA | Ebib |
| 5 | DPMA:MMA 85:15 | SM 920 25 | CuCl | PMDETA | Ebib |
| 6 | DPMA:MMA 85:15 | SM 920 25 | Cu(0) | PMDETA | Ebib |
| 7 | DPMA:MMA 85:15 | SM 920 25 | Cu(O) | PMDETA | Ebib |
| 8 | DPMA:MMA 85:15 | SM 920 25 | Cu(0) | PMDETA | Ebib |
| 9 | DPMA:MMA 85:15 | SM 920 25 | Cu(O) | PMDETA | Ebib |
| 10 | MMA 100 | Toluol 67 | Cu₂O | PMDETA | Ebib |

Bei den Ansätzen 1 bis 5 betrug das molare Verhältnis CuCl : PMDETA : Ebib = 0,5 : 0,1 : 1. Das theoretische Molekulargewicht war 20.000 g/mol. Bei den Ansätzen 6 bis 9 betrug das Verhältnis Cu(0) : PMDETA : Ebib = 0,14 cm²/g : 0,2 Gew.-% : 0,98 Gew.-%, jeweils bezogen auf die Monomermischung. Das theoretische Molekulargewicht war 20.000 g/mol. Beim Ansatz 10 betrug das molare Verhältnis Cu₂O : PMDETA : Ebib =1:1:1. Das theoretische Molekulargewicht war 35.000 g/mol.

### b) Filtrierhilfsmittel

Die in Tabelle 2 angegebenen erfindungsgemäßen Filtrierhilfsmittel wurden wie folgt erhalten:

### b-1) FHM 1

Eine Mischung aus 85 Gew.-% Isodecylacrylat, 10 Gew.-% Methylacrylat und 5 Gew.-% Acrylsäure wurde in Mineralöl Vestinol OA (Degussa-Hüls AG) bei 85°C unter Verwendung von 0,1 Gew.-% tert. Butylper-2-ethylhexanoat bezogen auf die Monomermischung im Batch polymerisiert. Dabei betrug der Feststoffanteil des Ansatzes gegen Ende der Polymerisation 40 Gew.-%. Nach 2 Stunden wurde mit 0,4 Gew.-% tert. Butylperisononanoat nachinitiiert, um den Restmonomergehalt zu senken.

### b-2) FHM 2

Eine Mischung aus 18,9 Gew.-% SMA, 71,1 Gew.-% DPMA, 5 Gew.-% Acrylsäure und 5 Gew.-% Methacrylsäure wurden in 100 N Mineralöl wie FHM 1 polymerisiert.

### b-3) FHM 3

Eine Mischung aus 90 Gew.-% Butylmethacrylat, 5 Gew.-% Acrylsäure und 5 Gew.-% Methacrylsäure wurden in Toluol bei 70°C unter Verwendung von 0,2 Gew.-% tert. Butylperpivalat bezogen auf die Monomermischung im Batch polymerisiert. Dabei betrug der Feststoffanteil des Ansatzes gegen Ende der Polymerisation 40 Gew.-%. Es wurde mit 0,4 Gew.-% tert. Butylperisononanoat nachinitiiert, um den Restmonomergehalt zu senken.

Als Referenz wurden die folgenden kommerziell erhältlichen Filtrierhilfsmittel verwendet:
Polyacrylsäure (PAA) bezogen von der Fa. Aldrich
®Celite 560 der Manville Corp., USA
®Celite 535 der Manville Corp., USA
®Tonsil L80FF der Süd-Chemie AG

### c) Filtration der Polymerlösungen

Zur Abtrennung des Übergangsmetallkatalysators wurde der jeweiligen Polymerlösung die in Tabelle 3 angegebenen Mengen der jeweiligen Filtrationshilfsmittel zugegeben. Dabei beziehen sich die Angaben bezüglich der Filtrierhilfsmittel FHM 1, FHM 2 und FHM 3 auf die eingesetzte Menge an Polymer ohne Lösungsmittel. Anschließend wurde das Reaktionsgemisch unter Verwendung einer Filterpresse der Fa. Seitz mit beheizbarer Metallummantelung (Typ EF 14/2, Baujahr 1990) und eines Tiefenfilters der Fa. Seitz, deren Typ in Tabelle 4 jeweils angegeben ist, filtriert. Das Filtrieren erfolgte bei 100°C und einem Überdruck von 2 bar. Das so erhaltene Filtrat wurde mittels GPC und AAS analysiert, um das erhaltene Polymer und den Gehalt an Übergangsmetall zu charakterisieren.

In Tabelle 4 sind die erhaltenen Ergebnisse, wie Filtrationsrate und Kupfergehalt, in Tabelle 5 die Eigenschaften der resultierenden Polymere, wie Zahlenmittel des Molekulargewichts Mn und Polydispersität PDI (Mw/Mn) sowie kinematische Viskosität bei 20% Polymergehalt gemäß ASTM-D 445 des Filtrats ν^{100°C} zusammengefaßt.

**Tabelle 3: Verwendete Filtrierhilfsmittel (Alle Angaben in [g])**

| **Versuch** | **PAA** | **Celite 560** | **Celite 535** | **Tonsil L80FF** | **FHM1** | **FHM2** | **FHM3** |
|---|---|---|---|---|---|---|---|
| VB1 | - | - | - | - | - | - | - |
| VB2 | 0,5 | 1 | - | - | - | - | - |
| VB3 | - | 1 | - | 1 | - | - | - |
| B1 | - | 0,5 | - | - | 0,1 | - | - |
| VB4 | 0,5 | 1 | - | - | - | - | - |
| VB5 | - | 1 | - | 1 | - | - | - |
| B2 | - | 0,5 | - | - | 0,25 | - | - |
| VB6 | 0,5 | 1 | - | - | - | - | - |
| VB7 | - | 1 | - | 1 | - | - | - |
| B3 | - | 1,5 | - | - | 1 | - | - |
| B4 | - | 0,5 | - | - | - | 0,2 | - |
| VB8 | 0,5 | 1 | - | - | - | - | - |
| VB9 | - | 1 | - | 1 | - | - | - |
| B5 | - | 1 | - | - | - | 0,1 | - |
| VB10 | - | 1 | - | 1 | - | - | - |
| B6 | - | 0,5 | - | - | - | - | - |
| VB11 | - | 1 | - | 1 | - | - | - |
| B7 | - | 0,5 | - | - | 0,1 | - | - |
| B8 | - | 0,5 | - | - | - | 0,1 | - |
| VB12 | 0,5 | 1 | - | - | - | - | - |
| VB13 | - | 1 | - | 1 | - | - | - |
| B9 | - | 0,3 | - | - | 0,1 | - | - |
| B10 | - | 0,3 | - | - | - | 0,1 | - |
| VB14 | - | - | - | - | - | - | - |
| VB15 | - | 1 | - | 1 | - | - | - |
| B11 | - | 0,5 | - | - | - | 0,05 | - |
| B12 | - | - | 1 | - | - | 0,05 | - |
| VB16 | - | 1 | - | 1 | - | - | - |
| B13 | - | 0,5 | - | - | - | 0,26 | - |
| VB17 | - | - | - | - | - | - | - |
| B14 | - | - | - | - | - | - | 0,5 |

**Tabelle 4: Filtration**

| **Versuch** | **Polymerlösung gemäß Ansatz** | **Filtertyp** | **Filtrationsrate [kg/m²h]** | **Cu-Gehalt [ppm]** |
|---|---|---|---|---|
| VB1 | 1 | T2600 | 775 | 75 |
| VB2 | 1 | T2600 | 1100 | 14 |
| VB3 | 1 | T2600 | 897 | 11 |
| B1 | 1 | T2600 | 1406 | 16 |
| VB4 | 2 | T2600 | 760 | 510 |
| VB5 | 2 | T2600 | 275 | 470 |
| B2 | 2 | T2600 | 1253 | 480 |
| VB6 | 3 | T2600 | 360 | 430 |
| VB7 | 3 | T2600 | 307 | 230 |
| B3 | 3 | T2600 | 846 | 110 |
| B4 | 3 | T2600 | 148 | 22 |
| VB8 | 4 | T2600 | 634 | 49 |
| VB9 | 4 | T2600 | 639 | 28 |
| B5 | 4 | T2600 | 1014 | 9 |
| VB10 | 5 | T2600 | 173 | 310 |
| B6 | 5 | T2600 | n. b. | 240 |
| VB11 | 6 | T2600 | 135 | 22 |
| B7 | 6 | T2600 | 220 | 5 |
| B8 | 6 | T2600 | 225 | 3 |
| VB12 | 7 | T2600 | 8 | 17 |
| VB13 | 7 | T2600 | nicht bestimmbar | i. A. |
| B9 | 7 | T2600 | 56 | 7 |
| B10 | 7 | T2600 | ca. 40 | 9 |
| VB14 | 8 | T2600 | 366 | 28 |
| VB15 | 8 | T2600 | 43 | 19 |
| B11 | 8 | T2600 | 39 | 4 |
| B12 | 8 | T2600 | 43 | 4 |
| VB16 | 9 | T2600 | nicht bestimmbar | 22 |
| B13 | 9 | T2600 | 33 | 2 |
| VB17 | 10 | 10µm Gaff | | 110 |
| B14 | 10 | 10µm Gaff | | 28 |

**Tabelle 5: Eigenschaften der Polymere**

| **Polymerlösung gemäß Ansatz** | ν^{100°C} **[cSt]** | **Mn [g/mol]** | **Polydispersität** |
|---|---|---|---|
| 1 | 17,29 | 23.800 | 1,23 |
| 2 | 22,22 | 24.000 | 2,85 (bimodal) |
| 3 | 17,88 | 24.000 | 1,30 |
| 4 | 17,29 | 23.700 | 1,20 |
| 5 | 20,63 | 24.300 | 3,26 (bimodal) |
| 6 | 24,30 | 31.800 | 1,59 |
| 7 | 23,17 | 28.800 | 1,70 |
| 8 | 20,80 | 45.100 | 2,25 |
| 9 | 23,03 | 44.400 | 2,33 |
| 10 | | 37.700 | 1,33 |

## Patentansprüche

1. Verfahren zur Herstellung von Polymerzusammensetzungen mit reduziertem Katalysatorgehalt, bei dem man ethylenisch ungesättigte Monomere, die weniger als 0,5 Gew.-% ethylenisch ungesättigte Monomere mit mindestens einer Carbonsäuregruppe, Sulfonsäuregruppe und/oder mindestens einer Phosphonsäuregruppe bezogen auf das Gesamtgewicht der ethylenisch ungesättigten Monomere enthalten, mittels Initiatoren, die eine übertragbare Atomgruppe aufweisen, und einem oder mehreren Katalysatoren, die mindestens ein Übergangsmetall umfassen, in Gegenwart von Liganden, die mit dem oder den metallischen Katalysatoren eine Koordinationsverbindung bilden können, polymerisiert und nach der Polymerisation den im Polymer enthaltenen Katalysator mindestens teilweise abtrennt, **dadurch gekennzeichnet, daß** man nach der Polymerisation die Polymerzusammensetzung in Gegenwart mindestens eines Filtrierhilfsmittels filtriert, welches mindestens 0,5 Gew.-% wiederkehrende Einheiten bezogen auf das Gesamtgewicht des Filtrierhilfsmittels enthält, die mindestens eine Carbonsäuregruppe, Sulfonsäuregruppe und/oder mindestens eine Phosphonsäuregruppe aufweisen.

2. Verfahren gemäß Anspruch 1, **dadurch gekennzeichnet, daß** man in Lösung polymerisiert.

3. Verfahren gemäß Anspruch 2, **dadurch gekennzeichnet, daß** man die Polymerisation in einem unpolaren Lösungsmittel durchgeführt.

4. Verfahren gemäß Anspruch 4, **dadurch gekennzeichnet, daß** man ein Mineralöl und/oder ein synthetisches Öl als Lösungsmittel einsetzt.

5. Verfahren gemäß Anspruch 4, **dadurch gekennzeichnet, daß** man ein Mineralöl einsetzt, welches 0,5 bis 30 Gew.-% aromatische Anteile, 15 bis 40 Gew.-% naphthenische Anteile, 35 bis 80 Gew.-% paraffinische Anteile, bis zu 3 Gew.-% n-Alkane und 0,05 bis 5 Gew.-% polare Verbindungen, jeweils bezogen auf das Gesamtgewicht des Mineralöls, enthält.

6. Verfahren gemäß mindestens einem der vorhergehenden Ansprüche, **dadurch gekennzeichnet, daß** man das Lösungsmittel in einer Menge im Bereich von 5 bis 95 Gew.-%, bezogen auf das Gesamtgewicht der flüssigen Zusammensetzung, einsetzt.

7. Verfahren gemäß einem oder mehreren der vorhergehenden Ansprüche, **dadurch gekennzeichnet, daß** man ethylenisch ungesättigte Monomere polymerisiert, die 50 bis 100 Gew.-%, bezogen auf das Gesamtgewicht der ethylenisch ungesättigten Monomere, einer oder mehrerer ethylenisch ungesättigten Esterverbindungen der Formel (I) 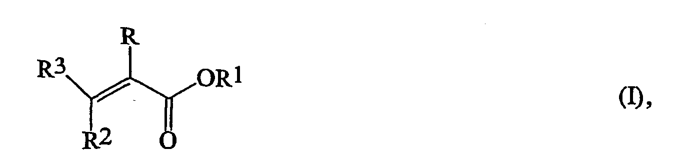 worin R Wasserstoff oder Methyl, R¹ einen linearen oder verzweigten Alkylrest mit 1 bis 40, R² und R³ unabhängig Wasserstoff oder eine Gruppe der Formel -COOR' bedeuten, wobei R' Wasserstoff oder einen linearen oder verzweigten Alkylrest mit 1 bis 40 Kohlenstoffatomen darstellt, aufweisen.

8. Verfahren gemäß einem oder mehreren der vorhergehenden Ansprüche, **dadurch gekennzeichnet, daß** man ethylenisch ungesättigte Monomere polymerisiert, die 50 bis 100 Gew.-%, bezogen auf das Gesamtgewicht der ethylenisch ungesättigten Monomere, einer oder mehrerer ethylenisch ungesättigten Esterverbindungen der Formel (II) 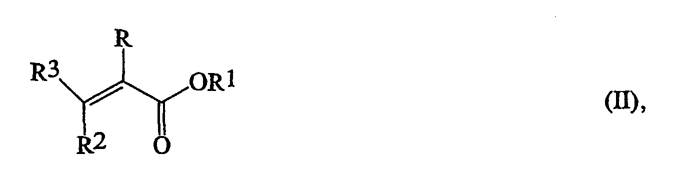 worin R Wasserstoff oder Methyl, R¹ einen linearen oder verzweigten Alkylrest mit 8 bis 40, vorzugsweise 10 bis 40, Kohlenstoffatomen, R² und R³ unabhängig Wasserstoff oder eine Gruppe der Formel -COOR' bedeuten, wobei R' Wasserstoff oder einen linearen oder verzweigten Alkylrest mit 8 bis 40, vorzugsweise 10 bis 40, Kohlenstoffatomen darstellt, aufweisen.

9. Verfahren nach einem oder mehreren der vorhergehenden Ansprüche, **dadurch gekennzeichnet, daß** man eine Monomerzusammensetzung polymerisiert aufweisend mindestens 50 Gew.-% eines oder mehrerer (Meth)acrylate der Formel (III) 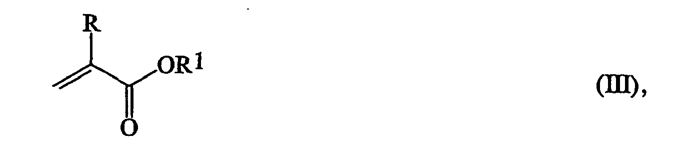 worin R Wasserstoff oder Methyl und R¹ einen linearen oder verzweigten Alkylrest mit 8 bis 40, vorzugsweise 10 bis 40, Kohlenstoffatomen bedeuten.

10. Verfahren nach einem oder mehreren der vorhergehenden Ansprüche, **dadurch gekennzeichnet, daß** man eine Monomerzusammensetzung polymerisiert aufweisend
a) 60 bis 100 Gew.-% einer oder mehreren ethylenisch ungesättigten Esterverbindungen der Formel (II) 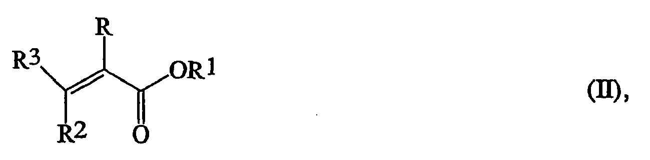 worin R Wasserstoff oder Methyl, R¹ einen linearen oder verzweigten Alkylrest mit 8 bis 40, vorzugsweise 10 bis 40, Kohlenstoffatomen, R² und R³ unabhängig Wasserstoff oder eine Gruppe der Formel -COOR' bedeuten, wobei R' Wasserstoff oder einen linearen oder verzweigten Alkylrest mit 8 bis 40, vorzugsweise 10 bis 40, Kohlenstoffatomen darstellt,
b) 0 bis 40 Gew.-% eines oder mehrerer (Meth)acrylate der Formel (IV) 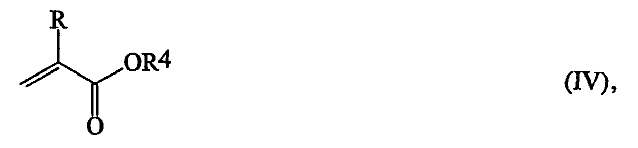 worin R Wasserstoff oder Methyl und R⁴ einen linearen oder verzweigten Alkylrest mit 1 bis 7 Kohlenstoffatomen bedeuten,
c) 0 bis 40 Gew.-% eines oder mehrerer (Meth)acrylate der Formel (V) 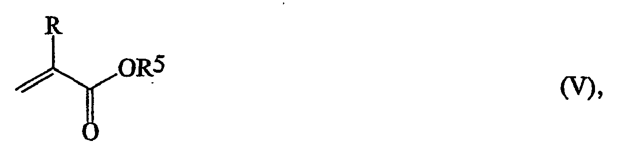 worin R Wasserstoff oder Methyl und R⁵ einen mit einer OH-Gruppe substituierten Alkylrest mit 2 bis 20 Kohlenstoffatomen oder einen alkoxylierten Rest der Formel (VI) 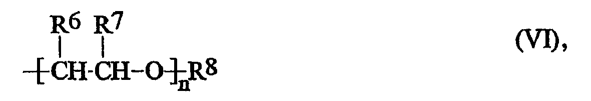 worin R⁶ und R⁷ unabhängig für Wasserstoff oder Methyl, R⁸ Wasserstoff oder einen Alkylrest mit 1 bis 40 Kohlenstoffatomen und n eine ganze Zahl von 1 bis 60 steht, bedeuten,
d) 0 bis 40 Gew.-% eines oder mehrerer (Meth)acrylate der Formel (VII) 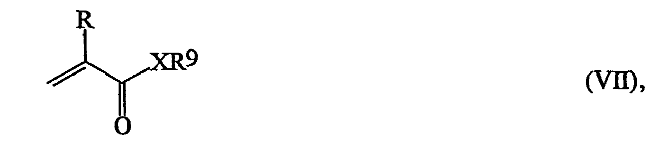 worin R Wasserstoff oder Methyl, X Sauerstoff oder eine Aminogruppe der Formel - NH- oder -NR¹⁰-, worin R¹⁰ für einen Alkylrest mit 1 bis 40 Kohlenstoffatomen steht, und R⁹ einen mit mindestens einer -NR¹¹R¹²-Gruppe substituierten linearen oder verzweigten Alkylrest mit 2 bis 20, vorzugsweise 2 bis 6 Kohlenstoffatomen bedeuten, wobei R¹¹ und R¹² unabhängig von einander für Wasserstoff, einen Alkylrest mit 1 bis 20, vorzugsweise 1 bis 6 stehen oder worin R¹¹ und R¹² unter Einbeziehung des Stickstoffatoms und gegebenenfalls eines weiteren Stickstoff oder Sauerstoffatoms einen 5- oder 6-gliederigen Ring bilden, der gegebenenfalls mit C₁-C₆-Alkyl substituiert sein kann, und
e) 0 bis 40 Gew.-% eines oder mehrerer Comonomere, wobei sich die Angabe Gew.-% jeweils auf das Gesamtgewicht der ethylenisch ungesättigten Monomere bezieht.

11. Verfahren nach Anspruch 8, **dadurch gekennzeichnet, daß** man als Comonomere Styrol, (Meth)acrylat-Derivate und/oder dispergierende Monomere einsetzt.

12. Verfahren gemäß einem oder mehreren der vorhergehenden Ansprüche, **dadurch gekennzeichnet, daß** man metallisches Kupfer, Cu₂O, CuBr, CuCl, CuI, CuN₃, CuSCN, CuCN, CuNO₂, CuNO₃, CuBF₄, Cu(CH₃COO) oder Cu(CF₃COO) als Katalysator einsetzt.

13. Verfahren gemäß einem oder mehreren der vorhergehenden Ansprüche, **dadurch gekennzeichnet, daß** man mindestens einen Chelatliganden einsetzt, der N-Atome enthält.

14. Verfahren gemäß einem oder mehreren der vorhergehenden Ansprüche, **dadurch gekennzeichnet, daß** man einen Initiator einsetzt, der Cl, Br, und/oder I aufweist.

15. Verfahren gemäß einem oder mehreren der vorhergehenden Ansprüche, **dadurch gekennzeichnet, daß** man mindestens ein unvernetztes Filtrierhilfsmittel einsetzt.

16. Verfahren gemäß einem oder mehreren der vorhergehenden Ansprüche, **dadurch gekennzeichnet, daß** man mindestens ein Filtrierhilfsmittel einsetzt, welches durch Polymerisation der folgenden Monomerzusammensetzung erhältlich ist
I) 0,5 - 20 Gew.-%, bezogen auf das Gesamtgewicht der Monomerzusammensetzung, einer oder mehrerer der vorstehend genannten ethylenisch ungesättigten Verbindungen mit mindestens einer Carbonsäuregruppe, Sulfonsäuregruppe und/oder mindestens einer Phosphonsäuregruppe und
II) 99, 5 - 80 Gew.-%, bezogen auf das Gesamtgewicht der Monomerzusammensetzung, einer oder mehrerer ethylenisch ungesättigten Esterverbindungen der Formel (IX) 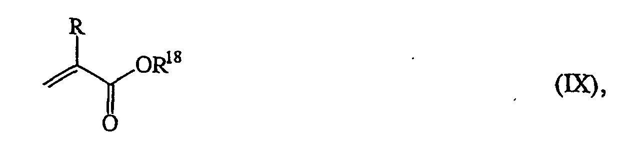 worin R Wasserstoff oder Methyl und R¹⁸ einen linearen oder verzweigten Alkylrest mit 1 bis 18 Kohlenstoffatomen bedeuten, und
wobei die Summe der Verbindungen I) und II) 100 Gew.-% ergibt.

17. Verfahren gemäß einem oder mehreren der vorhergehenden Ansprüche, **dadurch gekennzeichnet, daß** man nach der Polymerisation die Polymerzusammensetzung bei einer Temperatur im Bereich von 90 bis 130°C filtriert.

18. Verfahren gemäß einem oder mehreren der Ansprüche, daß man Polymere mit einem Gewichtsmittel des Molekulargewichts ≥ 7.000 g/mol herstellt.

19. Verfahren gemäß einem oder mehreren der Ansprüche, **dadurch gekennzeichnet, daß** man das hergestellte Polymer isoliert.

## Claims

1. Process for producing polymer compositions with reduced catalyst content, wherein ethylenically unsaturated monomers containing less than 0.5 wt% of ethylenically unsaturated monomers with at least one carboxylic acid group, sulfonic acid group and/or at least one phosphonic acid group relative to the total weight of the ethylenically unsaturated monomers are polymerized by means of initiators containing a transferable group of atoms and with one or more catalysts comprising at least one transition metal in the presence of ligands which can form a coordination compound with the metal catalyst or catalysts and, after the polymerization, the catalyst contained in the polymer is at least partly separated, **characterized in that,** after the polymerization, the polymer composition is filtered in the presence of at least one filter aid which contains at least 0.5 wt%, relative to the total weight of the filter aid, of repeating units that contain at least one carboxylic acid group, sulfonic acid group and/or at least one phosphonic acid group.

2. Process according to Claim 1, **characterized in that** the polymerization is performed in solution.

3. Process according to Claim 2, **characterized in that** the polymerization is performed in a nonpolar solvent.

4. Process according to Claim 4, **characterized in that** a mineral oil and/or a synthetic oil is used as the solvent.

5. Process according to Claim 4, **characterized in that** there is used a mineral oil which contains 0.5 to 30 wt% of aromatic constituents, 15 to 40 wt% of naphthenic constituents, 35 to 80 wt% of paraffinic constituents, up to 3 wt% of n-alkanes and 0.05 to 5 wt% of polar compounds, each relative to the total weight of the mineral oil.

6. Process according to at least one of the preceding claims, **characterized in that** the solvent is used in a proportion ranging from 5 to 95 wt% relative to the total weight of the liquid composition.

7. Process according to one or more of the preceding claims, **characterized in that** there are polymerized ethylenically unsaturated monomers which contain 50 to 100 wt%, relative to the total weight of the ethylenically unsaturated monomers, of one or more ethylenically unsaturated ester compounds of formula (I) 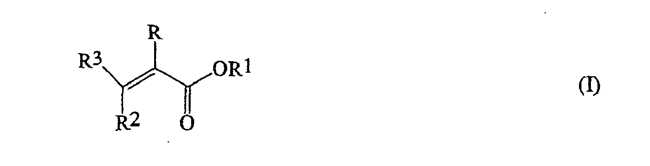 wherein R denotes hydrogen or methyl, R¹ denotes a straight-chain or branched alkyl radical with 1 to 40 carbon atoms, R² and R³ independently denote hydrogen or a group of the formula -COOR', wherein R' denotes hydrogen or a straight-chain or branched alkyl radical with 1 to 40 carbon atoms.

8. Process according to one or more of the preceding claims, **characterized in that** there are polymerized ethylenically unsaturated monomers which contain 50 to 100 wt%, relative to the total weight of the ethylenically unsaturated monomers, of one or more ethylenically unsaturated ester compounds of formula (II) 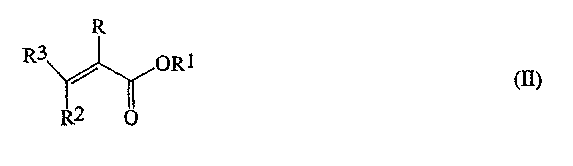 wherein R denotes hydrogen or methyl, R¹ denotes a straight-chain or branched alkyl radical with 8 to 40, preferably 10 to 40 carbon atoms, R² and R³ independently denote hydrogen or a group of the formula -COOR', wherein R' denotes hydrogen or a straight-chain or branched alkyl radical with 8 to 40, preferably 10 to 40 carbon atoms.

9. Process according to one or more of the preceding claims, **characterized in that** there is polymerized a monomer composition containing at least 50 wt% of one or more (meth)acrylates of formula (III) 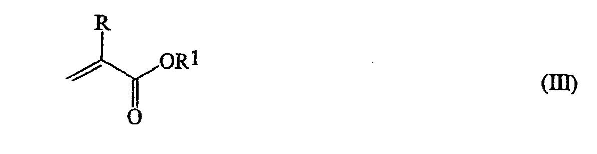 wherein R denotes hydrogen or methyl and R¹ denotes a straight-chain or branched alkyl radical with 8 to 40, preferably 10 to 40 carbon atoms.

10. Process according to one or more of the preceding claims, **characterized in that** there is polymerized a monomer composition containing
a) 60 to 100 wt% of one or more ethylenically unsaturated ester compounds of formula (II) 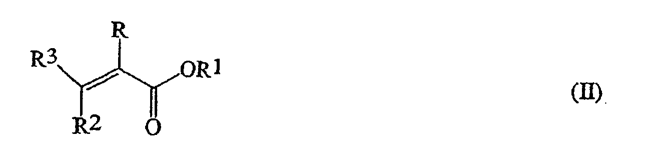 wherein R denotes hydrogen or methyl, R¹ denotes a straight-chain or branched alkyl radical with 8 to 40, preferably 10 to 40 carbon atoms, R² and R³ independently denote hydrogen or a group of the formula -COOR', wherein R' denotes hydrogen or a straight-chain or branched alkyl radical with 8 to 40, preferably 10 to 40 carbon atoms,
b) 0 to 40 wt% of one or more (meth)acrylates of formula (IV) 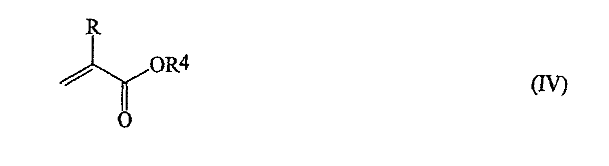 wherein R denotes hydrogen or methyl and R⁴ denotes a straight-chain or branched alkyl radical with 1 to 7 carbon atoms,
c) 0 to 40 wt% of one or more (meth)acrylates of formula (V) 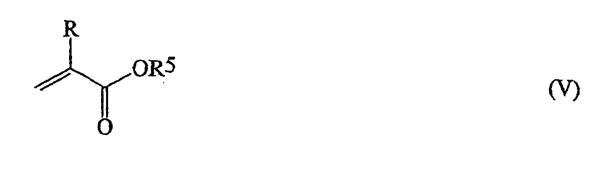 wherein R denotes hydrogen or methyl and R⁵ denotes an alkyl radical, substituted with an OH group, with 2 to 20 carbon atoms, or an alkoxylated radical of formula (VI) 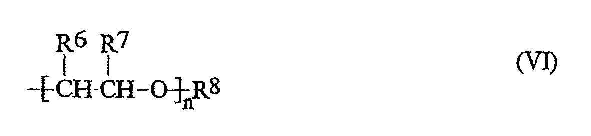 wherein R⁶ and R⁷ independently stand for hydrogen or methyl, R⁸ stands for hydrogen or an alkyl radical with 1 to 40 carbon atoms, and n stands for an integral number from 1 to 60,
d) 0 to 40 wt% of one or more (meth)acrylates of formula (VII) 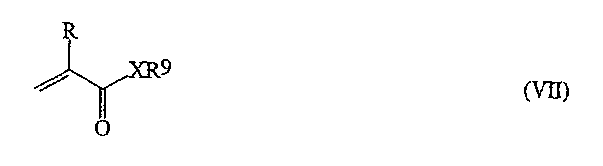 wherein R denotes hydrogen or methyl, X denotes oxygen or an amino group of formula -NH- or -NR¹⁰-, wherein R¹⁰ stands for an alkyl radical with 1 to 40 carbon atoms, and R⁹ denotes a straight-chain or branched alkyl radical, substituted by at least one -NR¹¹R¹² group, with 2 to 20, preferably 2 to 6 carbon atoms, wherein R¹¹ and R¹² independently of one another stand for hydrogen, an alkyl radical with 1 to 20, preferably 1 to 6 carbon atoms, or wherein R¹¹ and R¹² form a 5-membered or 6-membered ring, which includes the nitrogen atom and possibly one further nitrogen or oxygen atom, and which may or may not be substituted with C₁ to C₆ alkyl, and
e) 0 to 40 wt% of one or more comonomers, wherein the wt% value in each case is relative to the total weight of ethylenically unsaturated monomers.

11. Process according to Claim 8, **characterized in that** styrene, (meth)acrylate derivatives and/or dispersing monomers are used as comonomers.

12. Process according to one or more of the preceding claims, **characterized in that** metallic copper, Cu₂O, CuBr, CuCl, CuI, CuN₃, CuSCN, CuCN, CuNO₂, CuNO₃, CuBF₄, Cu(CH₃COO) or Cu(CF₃COO) are used as the catalyst.

13. Process according to one or more of the preceding claims, **characterized in that** at least one chelate ligand containing N atoms is used.

14. Process according to one or more of the preceding claims, **characterized in that** an initiator containing Cl, Br and/or I is used.

15. Process according to one or more of the preceding claims, **characterized in that** at least one non-crosslinked filter aid is used.

16. Process according to one or more of the preceding claims, **characterized in that** at least one filter aid is used which can be obtained by polymerization of the following monomer composition
I) 0.5 to 20 wt%, relative to the total weight of the monomer composition, of one or more of the ethylenically unsaturated compounds with at least one carboxylic acid group, sulfonic acid group and/or at least one phosphonic acid group cited in the foregoing, and
II) 99.5 to 80 wt%, relative to the total weight of the monomer composition, of one or more ethylenically unsaturated ester compounds of formula (IX) 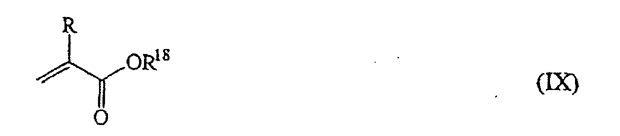 wherein R denotes hydrogen or methyl and R¹⁸ denotes a straight-chain or branched alkyl radical with 1 to 18 carbon atoms, and
the sum of compounds I) and II) is 100 wt%.

17. Process according to one or more of the preceding claims, **characterized in that,** after the polymerization, the polymer composition is filtered at a temperature in the range of 90 to 130EC.

18. Process according to one or more of the preceding claims, **characterized in that** polymers with a weight-average molecular weight of ∃ 7,000 g/mol are produced.

19. Process according to one or more of the preceding claims, **characterized in that** the polymer produced is isolated.

## Revendications

1. Procédé pour la préparation de compositions de polymères à teneur réduite en catalyseur, dans lequel on polymérise des monomères à insaturation éthylénique, qui contiennent moins de 0,5 % en poids de monomères à insaturation éthylénique comportant au moins un groupe carboxy, un groupe sulfo et/ou au moins un groupe phosphono, par rapport au poids total des monomères à insaturation éthylénique, à l'aide d'amorceurs qui comportent un groupe d'atomes transférable, et d'un ou plusieurs catalyseurs qui comprennent au moins un métal de transition, en présence de ligands qui peuvent former un composé de coordination avec le ou les catalyseur(s) métallique(s) et, après la polymérisation, on sépare au moins partiellement le catalyseur contenu dans le polymère, **caractérisé en ce qu'**après la polymérisation on filtre la composition de polymère en présence d'au moins un adjuvant de filtration qui contient au moins 0,5 % en poids de motifs répétitifs, par rapport au poids total de l'adjuvant de filtration, qui comportent au moins un groupe carboxy, un groupe sulfo et/ou au moins un groupe phosphono.

2. Procédé selon la revendication 1, **caractérisé en ce qu'**on effectue la polymérisation en solution.

3. Procédé selon la revendication 2, **caractérisé en ce qu'**on effectue la polymérisation dans un solvant non polaire.

4. Procédé selon la revendication 4, **caractérisé en ce qu'**on utilise comme solvant une huile minérale et/ou une huile synthétique.

5. Procédé selon la revendication 4, **caractérisé en ce qu'**on utilise une huile minérale qui contient de 0,5 à 30 % en poids de fractions aromatiques, de 15 à 40 % en poids de fractions naphténiques, de 35 à 80 % en poids de fractions paraffiniques, jusqu'à 3 % en poids d'alcanes et de 0,05 à 5 % en poids de composés polaires, chaque fois par rapport au poids total de l'huile minérale.

6. Procédé selon au moins l'une des revendications précédentes, **caractérisé en ce qu'**on utilise le solvant en une quantité dans la plage allant de 5 à 95 % en poids, par rapport au poids total de la composition liquide.

7. Procédé selon une ou plusieurs des revendications précédentes, **caractérisé en ce qu'**on polymérise des monomères à insaturation éthylénique qui comportent de 50 à 100 % en poids, par rapport au poids total des monomères à insaturation éthylénique, d'un ou plusieurs composés ester à insaturation éthylénique, de formule (I) 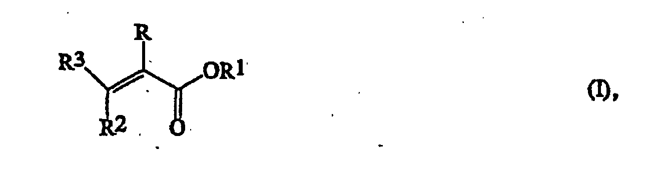 dans laquelle R représente un atome d'hydrogène ou le groupe méthyle, R¹ représente un radical alkyle linéaire ou ramifié ayant de 1 à 40 atomes de carbone, R² et R³ représentent, indépendamment l'un de l'autre, un atome d'hydrogène ou un groupe de formule -COOR', R' représentant un atome d'hydrogène ou un radical alkyle linéaire ou ramifié ayant de 1 à 40 atomes de carbone.

8. Procédé selon une ou plusieurs des revendications précédentes, **caractérisé en ce qu'**on polymérise des monomères à insaturation éthylénique qui comportent de 50 à 100 % en poids, par rapport au poids total des monomères à insaturation éthylénique, d'un ou plusieurs composés ester à insaturation éthylénique, de formule (II) 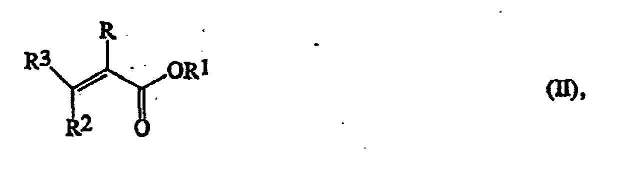 dans laquelle R représente un atome d'hydrogène ou le groupe méthyle, R¹ représente un radical alkyle linéaire ou ramifié ayant de 8 à 40, de préférence de 10 à 40 atomes de carbone, R² et R³ représentent, indépendamment l'un de l'autre, un atome d'hydrogène ou un groupe de formule -COOR', R' représentant un atome d'hydrogène ou un radical alkyle linéaire ou ramifié ayant de 8 à 40, de préférence de 10 à 40 atomes de carbone.

9. Procédé selon une ou plusieurs des revendications précédentes, **caractérisé en ce qu'**on polymérise une composition de monomères comportant au moins 50 % en poids d'un ou plusieurs (méth)acrylate(s) de formule (III) 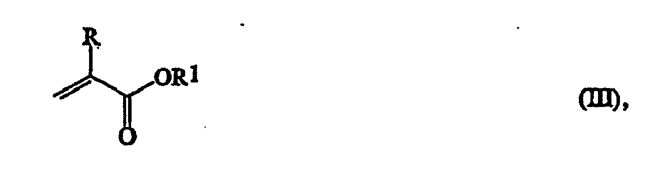 dans laquelle R représente un atome d'hydrogène ou le groupe méthyle et R¹ représente un radical alkyle linéaire ou ramifié ayant de 8 à 40, de préférence de 10 à 40 atomes de carbone.

10. Procédé selon une ou plusieurs des revendications précédentes, **caractérisé en ce qu'**on polymérise une composition de monomères comportant
a) 60 à 100 % en poids d'un ou plusieurs composés ester à insaturation éthylénique, de formule (II) 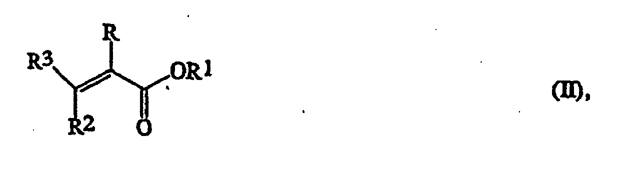 dans laquelle R représente un atome d'hydrogène ou le groupe méthyle, R¹ représente un radical alkyle linéaire ou ramifié ayant de 8 à 40, de préférence de 10 à 40, atomes de carbone, R² et R³ représentent, indépendamment l'un de l'autre, un atome d'hydrogène ou un groupe de formule -COOR', R' représentant un atome d'hydrogène ou un radical alkyle linéaire ou ramifié ayant de 8 à 40, de préférence de 10 à 40 atomes de carbone,
b) 0 à 40 % en poids d'un ou plusieurs (méth)-acrylate(s) de formule (IV) 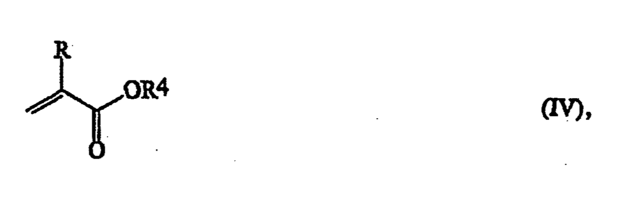 dans laquelle R représente un atome d'hydrogène ou le groupe méthyle et R⁴ représente un radical alkyle linéaire ou ramifié ayant de 1 à 7 atomes de carbone,
c) 0 à 40 % en poids d'un ou plusieurs (méth)-acrylate(s) de formule (V) 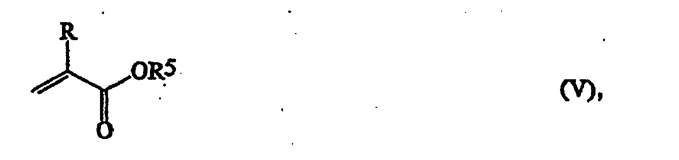 dans laquelle R représente un atome d'hydrogène ou le groupe méthyle et R⁵ représente un radical alkyle substitué par un groupe OH, ayant de 2 à 20 atomes de carbone, ou un radical alcoxylé de formule (VI) 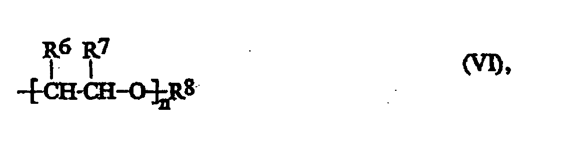 dans laquelle R⁶ et R⁷ représentent, indépendamment l'un de l'autre, un atome d'hydrogène ou le groupe méthyle, R⁸ représente un atome d'hydrogène ou un radical alkyle ayant de 1 à 40 atomes de carbone et n représente un nombre entier allant de 1 à 60,
d) 0 à 40 % en poids d'un ou plusieurs (méth)-acrylate(s) de formule (VII) 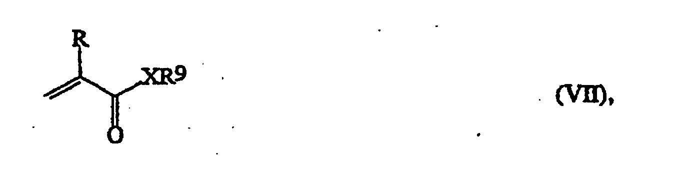 dans laquelle R représente un atome d'hydrogène ou le groupe méthyle, X représente un atome d'oxygène
ou un groupe amino de formule -NH- ou -NR¹⁰-, R¹⁰ représentant un radical alkyle ayant de 1 à 40 atomes de carbone, et R⁹ représente un radical alkyle linéaire ou ramifié ayant de 2 à 20, de préférence de 2 à 6 atomes de carbone, substitué par au moins un groupe -NR¹¹R¹², R¹¹ et R¹² représentant, indépendamment l'un de l'autre, un atome d'hydrogène, un radical alkyle ayant de 1 à 20, de préférence de 1 à 6 atomes de carbone, ou R¹¹ et R¹² formant, avec inclusion de l'atome d'azote et éventuellement d'un autre atome d'azote
ou d'un atome d'oxygène, un cycle à 5 ou 6 chaînons, pouvant éventuellement être substitué par alkyle en C₁-C₆, et
e) 0 à 40 % en poids d'un ou plusieurs comonomères,
les pourcentages en poids se rapportant chacun au poids total des monomères à insaturation éthylénique.

11. Procédé selon la revendication 8, **caractérisé en ce qu'**on utilise comme comonomères le styrène, des dérivés de (méth)acrylate et/ou des monomères dispersants.

12. Procédé selon une ou plusieurs des revendications précédentes, **caractérisé en ce qu'**on utilise comme catalyseur du cuivre métallique, Cu₂O, CuBr, CuCl, CuI, CuN₃, CuSCN, CuCN, CuNO₂, CuNO₃, CuBF₄, Cu(CH₃COO) ou Cu(CF₃COO).

13. Procédé selon une ou plusieurs des revendications précédentes, **caractérisé en ce qu'**on utilise au moins un ligand chélate qui contient des atomes d'azote.

14. Procédé selon une ou plusieurs des revendications précédentes, **caractérisé en ce qu'**on utilise un amorceur qui comporte Cl, Br et/ou I.

15. Procédé selon une ou plusieurs des revendications précédentes, **caractérisé en ce qu'**on utilise au moins un adjuvant de filtration non réticulé.

16. Procédé selon une ou plusieurs des revendications précédentes, **caractérisé en ce qu'**on utilise au moins un adjuvant de filtration qui peut être obtenu par polymérisation de la composition suivante de monomères
I) 0,5-20 % en poids, par rapport au poids total de la composition de monomères, d'un ou plusieurs des composés précités, à insaturation éthylénique, comportant au moins un groupe carboxy, un groupe sulfo et/ou au moins un groupe phosphono.
II) 99,5-80 % en poids, par rapport au poids total de la composition de monomères, d'un ou plusieurs composés ester à insaturation éthylénique, de formule (IX) 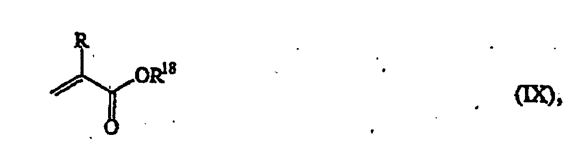 dans laquelle R représente un atome d'hydrogène ou le groupe méthyle et R¹⁸ représente radical alkyle linéaire ou ramifié ayant de 1 à 18 atomes de carbone, et
la somme des composés I) et II) est de 100 % en poids.

17. Procédé selon une ou plusieurs des revendications précédentes, **caractérisé en ce qu'**après la polymérisation on filtre la composition de polymère à une température dans la plage de 90 à 130 °C.

18. Procédé selon une ou plusieurs des revendications précédentes, **caractérisé en ce qu'**on prépare des polymères ayant une moyenne en poids de la masse moléculaire ≥ 7 000 g/mole.

19. Procédé selon une ou plusieurs des revendications précédentes, **caractérisé en ce qu'**on isole le polymère préparé.
